# EUROPÄISCHE PATENTSCHRIFT

(11) **EP 1 955 059 B1**
(45) Veröffentlichungstag und Bekanntmachung des Hinweises auf die Patenterteilung: **18.02.2009**
(21) Anmeldenummer: 06828595.6
(22) Anmeldetag: 01.12.2006
(51) Int. Cl.: G01N 30/20, G01N 30/24, G01N 30/82, G01N 30/88, G01N 30/44, G01N 30/02, G01N 30/46, G01N 30/08, G01N 35/10

(54) **PROBENGEBER, INSBESONDERE FÜR DIE HOCHLEISTUNGS-FLÜSSIGKEITSCHROMATOGRAPHIE**
SAMPLE INJECTOR, IN PARTICULAR FOR HIGH-POWER LIQUID CHROMATOGRAPHY
DISTRIBUTEUR D'ÉCHANTILLONS, EN PARTICULIER POUR LA CHROMATOGRAPHIE EN PHASE LIQUIDE À HAUTES PERFORMANCES

(30) Priorität: 01.12.2005 DE 102005057463
(43) Veröffentlichungstag der Anmeldung: 13.08.2008
(73) Patentinhaber: Dionex Softron GmbH, 82110 Germering (DE)
(72) Erfinder: TREMINTIN, Guillaume, F-35550 Sixt sur Aff (FR); SWART, Remco, NL-1401 RW Bussum (NL)
(74) Vertreter: Eder, Thomas
(86) Internationale Anmeldenummer: PCT/DE2006/002140
(87) Internationale Veröffentlichungsnummer: WO 2007/062642

(56) Entgegenhaltungen:
- JP-A- 2005 265 805
- SWART R; TREMINTIN G; VAN GILS M: "Fully Automated Off-line Multidimensional LC Methods in Proteomics" HPLC 2006: 30TH INT. SYMP. HIGH PERFORMANCE LIQUID PHASE SEPARATIONS,, [Online] 17. Juni 2006 (2006-06-17), - 23. Juni 2006 (2006-06-23) XP002424528 Gefunden im Internet: URL:http://www1.dionex.com/en-us/webdocs/4 0385_LPN%201851-01_LC%20Proteomics.pdf> [gefunden am 2007-03-13]
- VISSERS J P C; VAN SOEST R E J; CHERVET J P; CRAMERS C A: "Two-Dimensional Capillary Liquid Chromatography Based on Microfractionation" JOURNAL OF MICROCOLUMN SEPARATIONS, Bd. 11, Nr. 4, 11. März 1999 (1999-03-11), Seiten 277-286, XP002424529 WILEY
- SANDRA P; MEDVEDOVICI A; DAVID F: "Comprehensive pSFCXpSFC-MS for the Characterization of Triglycerides in Vegetable Oils" LC-GC EUROPE, 2. Dezember 2003 (2003-12-02), Seiten 2-4, XP002424552 ADVANSTAR COMMUNICATIONS
- BUSHEY M M ET AL: "AUTOMATED INSTRUMENTATION FOR COMPREHENSIVE TWO-DIMENSIONAL HIGH-PERFORMANCE LIQUID CHROMATOGRAPHY OF PROTEINS" ANALYTICAL CHEMISTRY, AMERICAN CHEMICAL SOCIETY. COLUMBUS, US, Bd. 62, Nr. 2, 15. Januar 1990 (1990-01-15), Seiten 161-167, XP000132928 ISSN: 0003-2700
- DRAGAN I, DOLMAN B; SNEEKES E-J; SWART R: "A proteome Analysis involving Off-line "D-LC of Intact Proteins, Proteolytic Digestion and Capillary RP-LC-MS/MS analysis" HPLC 2005: 29TH SYMP. HIGH PERFORMANCE LIQUID PHASE SEPARATIONS, STOCKOLM, SWEDEN, [Online] 26. Juni 2005 (2005-06-26), - 30. Juni 2005 (2005-06-30) XP002424530 Gefunden im Internet: URL:http://www1.dionex.com/en-us/webdocs/2 9493_UltiMate3000_Off-line_2D-LC_proteome_ analysis.pdf> [gefunden am 2007-03-13]
- MITULOVIC GORAN ET AL: "Automated, on-line two-dimensional nano liquid chromatography tandem mass spectrometry for rapid analysis of complex protein digests" PROTEOMICS, Bd. 4, Nr. 9, September 2004 (2004-09), Seiten 2545-2557, XP002424531 WILEY-VCH
- MACHTEJEVAS E ET AL: "Automated multi-dimensional liquid chromatography: sample preparation and identification of peptides from human blood filtrate" JOURNAL OF CHROMATOGRAPHY B: BIOMEDICAL SCIENCES & APPLICATIONS, ELSEVIER, AMSTERDAM, NL, Bd. 803, Nr. 1, 15. April 2004 (2004-04-15), Seiten 121-130, XP004495618 ISSN: 1570-0232

## Beschreibung

Die Erfindung betrifft eine Vorrichtung für das Zuführen von Proben zur einer Trenneinrichtung und für das Sammeln von mittels der Trenneinrichtung erzeugten Probenfraktionen, insbesondere für die Hochleistungs-Flüssigkeitschromatographie (HPLC High Performance Liquid Chromatography).

In der Flüssigkeitschromatographie wird ein Stoffgemisch in einer chromatographischen Säule in seine Bestandteile aufgetrennt, so dass diese analysiert oder weiter verarbeitet werden können.

Bei der Untersuchung komplexer Stoffgemische, wie z.B. von Peptiden oder Proteinen, stellt sich häufig das Problem, dass die Trennleistung nicht ausreicht, um die einzelnen Komponenten unterscheiden bzw. gezielt analysieren zu können. Daher benutzt man für derartige Stoffgemische mehrere hintereinandergeschaltete Trennschritte. Dabei ist es besonders effizient, für die einzelnen Trennungen jeweils unterschiedliche Stoffeigenschaften zu nutzen. Hierdurch lässt sich das Gemisch zunächst in Stoffgruppen auftrennen, die dann einzeln näher untersucht werden können. Derartige Verfahren sind als sog. zwei-, drei- oder mehrdimensionale Chromatographieverfahren (2D- bzw. 3D-Chromatographie) bekannt.

Dabei unterscheidet man zwischen Online-Methoden, bei denen die Trennschritte zeitlich direkt aufeinander folgen, sowie Offline-Techniken, bei denen die Trennschritte zeitlich unabhängig voneinander durchgeführt werden. Letzteres hat den Vorteil, dass die einzelnen Trennschritte unabhängig voneinander einzeln optimiert werden können.

Die Offline-Techniken erfordern jedoch einen höheren Aufwand, da die in den vorhergehenden Schritten bereits getrennten Komponenten (Fraktionen) in getrennter Form zwischengespeichert werden müssen, um sie den nachfolgenden Trennprozessen zu gegebener Zeit zuführen zu können. Den Prozess bezeichnet man als Fraktionierung.

Das Einsammeln der Fraktionen erfolgt in der Regel mit einem eigenen Gerät, dem Fraktionssammler. Dieser verteilt die Fraktionen auf eine entsprechende Anzahl von Fraktionssammel- oder -aufnahmegefäßen.

In der Regel möchte man dabei in jedem Fraktionssammelbehälter ein bestimmtes, vorgebbares Flüssigkeitsvolumen sammeln.

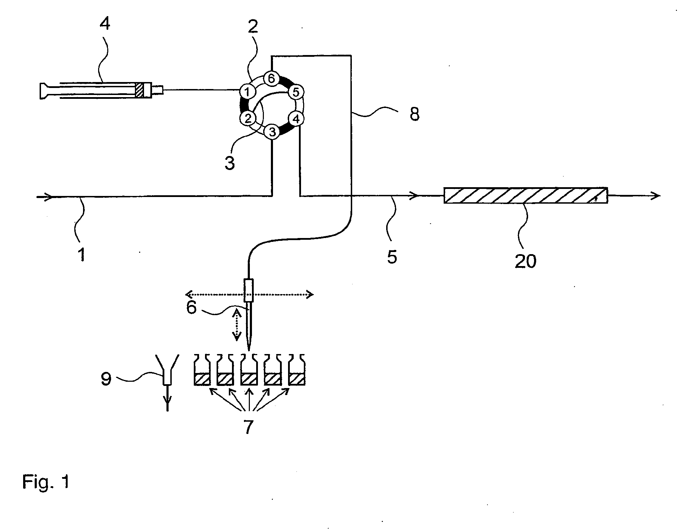

Automatisierte Analysesysteme verfügen in der Regel über automatische Probengeber, die eine Vielzahl von zu analysierenden Proben aufnehmen und diese der Reihe nach dem Analysesystem zuführen können. Ein derartiger Probengeber ist beispielsweise im US-Patent Nr. 5,814,742 beschrieben. Da solche Probengeber sowohl die Grundlage für die Erfindung als auch für den Stand der Technik bilden, werden deren Komponenten anhand der vereinfachten, schematischen Darstellung in Figur 1 erläutert.

Durch die Eingangskapillare 1 gelangt der von einer Pumpe gelieferte Flüssigkeitsstrom in den Probengeber und verlässt diesen über die Ausgangskapillare 5. Hier ist eine chromatographische Trennsäule angeschlossen, die im folgenden als Säule 20 bezeichnet wird. Diese befindet sich in der Regel außerhalb des Probengebers. Im Flüssigkeitsstrom befindet sich ein 6-Port-Schaltventil 2, das über zwei Schaltstellungen verfügt. Die in Figur gezeichnete Stellung wird im folgenden als "Position 1-2" bezeichnet, es sind jeweils die Ports 1 mit 2, 3 mit 4 sowie 5 mit 6 verbunden. Die zweite Stellung wird als "Position 6-1" bezeichnet und verbindet Port 2 mit 3, 4 mit 5 sowie 6 mit 1. Der Flüssigkeitsstrom aus der Eingangskapillare 1 kann also das Schaltventil 2 unmittelbar passieren. Die Probenbehälter 7 beinhalten die zu analysierenden Proben, die über eine Probennadel 6 entnommen werden können. Eine in Figur 1 nicht dargestellte Mechanik ermöglicht es, die Probennadel 6 und die Probenbehälter 7 relativ zueinander zu bewegen, so dass die Probennadel 6 jeden beliebigen Probenbehälter 7 anfahren und in diesen eintauchen kann, um die jeweilige Probe zu entnehmen.

In der gezeichneten Position 1-2 des Schaltventils 2 sind folgende Komponenten in Reihe geschaltet: eine Dosierspritze 4, eine Probenschleife 3, eine Verbindungskapillare 8 sowie die Probennadel 6. Während die Probennadel 6 in einen Probenbehälter 7 eintaucht, kann somit durch Ansaugen mit der Dosierspritze 4 Probenmaterial aus dem Probenbehälter 7 entnommen und insbesondere in die Probenschleife 3 gesaugt werden. Durch Umschalten des Schaltventils 2 in Position 6-1 wird die Probenschleife 3 zwischen die Eingangskapillare 1 und die Ausgangskapillare 5 geschaltet, und das Probenmaterial wird mit dem Flüssigkeitsstrom in Richtung auf die Säule 20 transportiert. Das Hinzufügen der Probe in den Flüssigkeitsstrom wird als Injektion bezeichnet. Auf diese beschriebene Weise können die zu untersuchenden Proben in beliebiger Reihenfolge injiziert werden. Während der Injektion ist die Dosierspritze 4 nun unmittelbar mit der Probennadel 6 verbunden. Um die Dosierspritze wieder zu entleeren, kann die Probennadel 6 zu einem Wasteport 9 gefahren werden, der das überschüssige Lösungsmittel aufnimmt und dem Abfall zuführt.

Weiterhin enthalten automatische Probengeber in der Regel Vorrichtungen, um die Probennadel 6 von etwa anhaftenden Resten der aufgenommenen Probe zu reinigen. Diese sind der Übersichtlichkeit halber in Figur 1 nicht dargestellt. Hierdurch soll vermieden werden, dass Probenmaterial von einem Probenbehälter 7 zum nächsten verschleppt wird.

Das oben beschriebene Injektionsprinzip hat den Nachteil, dass nicht nur die Probenschleife 3, sondern zumindest auch die Probennadel 6 und die Kapillare 8 mit Probenmaterial gefüllt werden müssen. Dadurch wird erheblich mehr Probenmaterial benötigt, als für die Injektion erforderlich ist. Ein weiterer Nachteil besteht darin, dass die zu injizierende Probenmenge durch die Größe der Probenschleife festgelegt ist. Zwar wäre es grundsätzlich möglich, die Spritze 4 soweit aufzuziehen, dass die Probenschleife 3 nur zum Teil mit Probenmaterial gefüllt ist, dazu müsste aber z.B. das Volumen der Kapillare 8 und der Probennadel 6 exakt bekannt sein.

Diese beiden Nachteile lassen sich durch das sogenannte "Mikroliter-Pickup"-Verfahren vermeiden, welches ebenfalls in US-Patent Nr. 5,814,742 beschrieben ist. Dabei enthält einer der Probenbehälter 7 eine Transportflüssigkeit, d.h. Lösungsmittel ohne Probenmaterial. Vor dem Ansaugen der Probe wird aus diesem Behälter eine gewisse Menge dieser Transportflüssigkeit angesaugt. Dann wird die Probennadel 6 in den Probenbehälter 7 gefahren, der die gewünschte Probe enthält. Nun wird lediglich die gewünschte, geringe Probenmenge angesaugt, deren Volumen in jedem Fall geringer sein muss als das Innenvolumen der Probenschleife 3. Danach wird die Probennadel wiederum in den Behälter mit Transportflüssigkeit gefahren und diese soweit angesaugt, dass sich der "Probenplug", eingeschlossen zwischen Transportflüssigkeit, in der Probenschleife 3 befindet. Bei diesem Verfahren geht kein Probenmaterial verloren, und es können auch kleine Probenvolumina injiziert werden, die wesentlich geringer sind als das Innenvolumen der Probenschleife.

Grundsätzlich kann ein Probengeber auch zur Probenfraktionierung eingesetzt werden, da der Probengeber bereits über eine Aufnahmevorrichtung für Probenbehälter und eine entsprechende Positioniermöglichkeit für die Probennadel verfügt. Damit sind die erforderlichen Komponenten für die Verteilung der Fraktionen auf eine Anzahl von Fraktionssammelbehältern bereits vorhanden. Entsprechende Lösungen sind beispielsweise veröffentlicht in:
Fa. LC Packings, Baarsjesweg 154, 1057 HM Amsterdam, Niederlande: Application Note FAMOS µ-Sampling Workstation, Nr. 10, Appendix I: "2-D capillary LC separations" und
Fa. Gilson Inc., Middleton, WI53562-0027, USA: Produktbroschüre 233 XL System for On-Line Column Switching, Seite 3: "Fraction collection in sealed vials..."

Diese vorbekannten Lösungen unterscheiden sich wegen gerätespezifischer Besonderheiten untereinander etwas im Aufbau, sie haben jedoch gemeinsam, dass für die Umschaltung zwischen Probengeber- und Fraktionssammler-Funktionalität ein zusätzliches Schaltventil benötigt wird. Da derartige Schaltventile aufgrund der hohen Anforderungen sehr kostspielig sind, bedeutet dies einen erheblichen Zusatzaufwand.

Dies gilt auch für die in Vissers, van Soest, Chervet, Cramers: "Two-Dimensional Capillary Liquid Chromatography Based on Microfractionation", Journal of Microcolumn Separations, Bd. 11, Nr. 4, 11. März 1999, Seiten 277-286 beschriebene Einrichtung, welche drei 6-Port-Schaltventile aufweist, und eine automatisierte, zweidimensionale off-line Trennung ermöglicht.

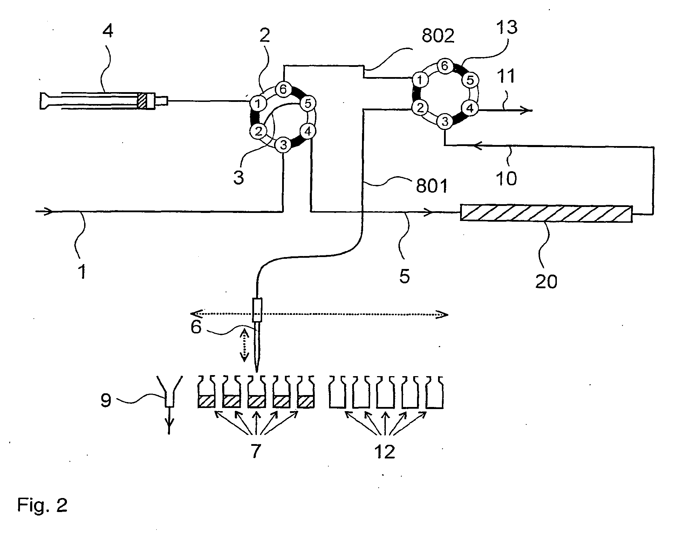

Eine derartige Lösung ist für das bessere Verständnis der vorliegenden Erfindung in Figur 2 schematisch dargestellt:

Der erste Trennschritt erfolgt in der Säule 20, d.h. die sammelnden Fraktionen treten in zeitlicher Folge am Ausgang der Säule 20 aus. Diese sollen nun auf eine Anzahl von Fraktionssammelbehältern verteilt werden.

Hierfür muss der Probengeber, wie in Figur 2 dargestellt, erweitert werden. Dazu wird die Verbindungskapillare 8 in zwei Verbindungskapillaren 801. und 802 aufgetrennt und dazwischen ein zweites Schaltventil 13 eingefügt. Die aus der Säule 20 austretenden Fraktionen, gelangen über die Rückführungskapillare 10 wieder in den Probengeber und können über das zweite Schaltventil 13, die Verbindungskapillare 801 und die Probennadel 6 den Fraktionssammelbehältern 12 zugeführt werden. Die Wastekapillare 11 führt in einen Abfallbehälter, in dem das vor oder nach dem Eintreffen der Fraktionen ankommende Lösungsmittel sowie unerwünschte Fraktionsbestandteile gesammelt werden können. Je nach Position des zweiten Schaltventils 13 arbeitet die Anordnung entweder als Probengeber oder als Fraktionssammler.

Die Arbeitsweise ist wie folgt: Zunächst sind beide Schaltventile 2 und 13 in Position 1-2, wie in Figur 2 dargestellt. Eine Probe wird in der oben beschriebenen Weise aus einem der Probenbehälter entnommen und durch Umschalten des Schaltventils 2 injiziert. Über die Ausgangskapillare 5 gelangt sie in die Säule 20, wo der erste Trennschritt durchgeführt wird. Das Passieren der Kapillaren und die Trennung selber nehmen eine gewisse Zeitdauer in Anspruch, so dass die getrennten Fraktionen zu einem späteren Zeitpunkt über die Rückführungskapillare 10 den Probengeber erreichen. Nun wird die Probennadel 6 auf den gewünschten Fraktionssammelbehälter 12 positioniert und das zweite Schaltventil 13 in Position 6-1 geschaltet, so dass die Rückführungskapillare 10 über die Verbindungskapillare 8 mit der Probennadel 6 verbunden ist. Die Fraktion wird dadurch im entsprechenden Fraktionssammelbehälter 12 gespeichert. Für die nächste Fraktion wird die Probennadel 6 auf den nächsten Fraktionssammelbehälter 12 positioniert.

Der vorliegenden Erfindung liegt daher ausgehend von diesem Stand der Technik die Aufgabe zugrunde, eine Vorrichtung für das Zuführen von Proben zu einer Trenneinrichtung und für das Sammeln von mittels der Trenneinrichtung erzeugten Probenfraktionen, insbesondere für die Hochleistungs-Flüssigkeitschromatographie, zu schaffen, die einen einfacheren und kostengünstigeren Aufbau aufweist.

Die Erfindung löst diese Aufgabe mit den Merkmalen des Patentanspruchs 1.

Die Erfindung geht von der Erkenntnis aus, dass es mit der in Anspruch 1 angegebenen Struktur unter Verwendung einer Schaltventileinheit mit wenigstens acht Ports und zwei Schaltstellungen möglich ist, eine derartige Vorrichtung unter der Verwendung lediglich einer einzigen Schaltventileinheit zu schaffen, wodurch ein gegenüber dem Stand der Technik deutlich einfacherer und kostengünstigerer Aufbau entsteht.

Des Weiteren ermöglicht die Erfindung das Nachrüsten vorhandener, einfacher Probengeber zu kombinierten Probengebern-/Fraktionssammlern.

Nach einer bevorzugten Ausführungsform der Erfindung weist die erste Schaltventileinheit (201) einen steuerbaren Antrieb auf, welcher durch eine Steuereinheit so angesteuert wird, dass sich die erste Schaltventileinheit während einer Probenansaugphase in der ersten Schaltstellung befindet, wobei während der Probenansaugphäse mittels der Entnahme- und Abgabeeinrichtung eine Probe aus einem Probenaufnahmegefäß in das Probenreservoir gefördert wird, dass die erste Schaltventileinheit nach der Probenansaugphase in die zweite Schaltstellung gesteuert wird, wobei in dieser sich an die Probenansaugphase anschließenden Proben-Injektionsphase die Probe mittels des über den Lösungsmittelzuführ-Port zugeführten Lösungsmittels aus dem Probenreservoir über den Trenneinrichtungsübergabe-Port der ersten Trenneinrichtung zugeführt wird und das von der ersten Trenneinrichtung über den Trenneinrichtungsübernahme-Port der Entnahme- und Abgabeeinrichtung zugeführte oder in dieser enthaltene Medium einem zusätzlichen Waste-port zugeführt wird, und dass nach der Probeninjektionsphase die erste Schaltventileinheit entweder in die erste Schaltstellung gesteuert wird oder in der zweiten Schaltstellung verbleibt, wobei in der ersten Schaltstellung Lösungsmittel direkt der ersten Trenneinrichtung zugeführt wird und dem Trenneinrichtungsübernahme-Port zugeführtes Medium über den Waste-Port der Schaltventileinheit dem Waste-Reservoir zugeführt wird, in der zweiten Schaltstellung Lösungsmittel unter Zwischenschaltung des Probenreservoirs der ersten Trenneinrichtung zugeführt wird und dem Trenneinrichtungsübernahme-Port zugeführtes Medium über den Ansaug- und Abgabe-Port der ersten Schaltventileinheit der Entnahme- und Abgabeeinrichtung und von dieser dem zusätzlichen Waste-Port zugeführt wird, und dass die erste Schaltventileinheit bevor die getrennten Fraktionen am Trenneinrichtungsübernahme-Port eintreffen in die zweite Schaltstellung gesteuert wird, wobei in dieser sich an die Proben-Injektionsphase anschliessenden ersten Trennphase der ersten Trenneinrichtung weiterhin Lösungsmittel zugeführt wird und das vom Ausgangsport der ersten Trenneinrichtung dem Trenneinrichtungsübernahme-Port der ersten Schaltventileinheit zugeführte Medium über den Ansaug- und Abgabeport der ersten Schaltventileinheit der Entnahme- und Abgabeeinrichtung zugeführt und von dieser in Form mehrerer Fraktionen in jeweils ein Fraktionsaufnahmegefäss abgegeben wird (Patentanspruch 2).

Die Steuereinheit kann dabei vor der Probenansaugphase die Entnahme- und Abgabeeinrichtung und/oder das Probenaufnahmegefäß, aus dem eine Probe entnommen werden soll, in eine Position steuern, in der eine Probe aus dem gewünschten Probenaufnahmegefäß entnommen werden kann.

Des Weiteren kann die Steuereinheit während der Injektionsphase die Entnahme- und Abgabeeinrichtung und/oder den zusätzlichen Waste-Port in eine Position bewegen, in der das aus der Entnahme- und Abgabeeinrichtung austretendes Medium dem Waste-Port zugeführt wird. Hierdurch kann in den Leitungen bzw. der Trennvorrichtung befindliche Flüssigkeit, die noch keine zu analysierenden Komponenten beinhaltet, abgeführt werden.

Die Steuereinheit kann während der Trennphase die Entnahme- und Abgabeeinrichtung und/oder die Fraktionsaufnahmegefäße zeitlich aufeinanderfolgend in mehrere Fraktionsabgabepositionen steuern, wobei in jeder Fraktionsabgabeposition aus der Entnahme- und Abgabeeinrichtung austretendes Medium dem betreffenden Fraktionsaufnahmegefäß als Fraktion zugeführt wird. Hierdurch ergibt sich eine Automatisierung des Fraktioniervorgangs.

Nach einer weiteren Ausführungsform der Erfindung kann zwischen dem Trenneinrichtungsübergabe-Port der Schaltventileinheit und dem Eingangsport der ersten Trenneinrichtung eine zweite Schaltventileinheit vorgesehen sein, welche den Trenneinrichtungsübergabe-Port der ersten Schaltventileinheit in einer ersten Schaltstellung mit dem Eingangsport der ersten Trenneinrichtung verbindet und in einer zweiten mit einem Eingangsport einer zweiten Trenneinrichtung für eine zweite Trennphase. Hierdurch kann eine 2D-Trennung mit einer automatisierten Fraktionierung nach der ersten Dimension (d.h. der ersten Trennphase) realisiert werden (Patentanspruch 7).

Dabei kann die zweite Schaltventileinheit einen ansteuerbaren Antrieb aufweisen und die Steuereinheit die zweite Schaltventileinheit zur Durchführung der zweiten Trennphase in die zweite Schaltstellung steuern (Patentanspruch 8).

In dieser Stellung der zweiten Schaltventileinheit steuert die Steuereinheit den Antrieb der ersten Schaltventileinheit zur Durchführung der zweiten Trennphase vorzugsweise so an, dass sich die erste Schaltventileinheit (201) während einer Probenansaugphase für die zweite Trennstufe in der ersten Schaltstellung befindet, wobei während der Probenansaugphase mittels der Entnahme- und Abgabeeinrichtung eine Probe aus einem Fraktionsaufnahmegefäß in das Probenreservoir gefördert wird, und dass die erste Schaltventileinheit nach der Probenansaugphase in die zweite Schaltstellung gesteuert wird, wobei in dieser sich an die Probenansaugphase anschließenden Proben-Injektionsphase für die zweite Trennphase die Probe mittels des über den Lösungsmittelzuführ-Port zugeführten Lösungsmittels aus dem Probenreservoir über den Trenneinrichtungsübergabe-Port der ersten Trenneinrichtung und die zweite Schaltventileinheit der zweiten Trenneinrichtung zugeführt wird (Patentanspruch 9).

Nach einer bevorzugten Ausführungsform der Erfindung weist die zweite Schaltventileinheit die Merkmale des Patentanspruch 10 auf. Hierdurch ergibt sich die Möglichkeit, auf einfache Weise für die zweite Dimension, d.h. die zweite Trennphase, ein zweites Lösungsmittel zu verwenden, wie dies in vielen Fällen zur Trennung nach unterschiedlichen Stoffeigenschaften erforderlich ist.

Die Steuereinheit steuert zur Durchführung einer zweiten Trennphase die Antriebe der ersten und zweiten Schaltventileinheit vorzugsweise so an, dass sich die erste Schaltventileinheit während einer Probenansaugphase in der ersten Schaltstellung befindet, wobei während der Probenansaugphase mittels der Entnahme- und Abgabeeinrichtung eine Probe aus einem Fraktionsaufnahmegefäß in das Probenreservoir gefördert wird, dass nach der Probenansaugphase die erste Schaltventileinheit in die zweite Schaltstellung und die zweite Schaltventileinheit in die zweite Schaltstellung gesteuert werden, wobei in dieser sich an die Probenansaugphase anschließenden Proben-Injektionsphase die Probe mittels des über den Lösungsmittelzuführ-Port der ersten Schaltventileinheit zugeführten Lösungsmittels aus dem Probenreservoir über den Trenneinrichtungsübergabe-Port der ersten Schaltventileinheit dem Probeninjektionsport der zweiten Schaltventileinheit und über den Trenneinrichtungsübergabe-Port der zweiten Schaltventileinheit dem Eingangsport der zweiten Trenneinrichtung zugeführt wird und dass nach der Proben-Injektionsphase die zweite Schaltventileinheit wieder in die erste Schaltstellung gesteuert wird, so dass das zweite Lösungsmittel über den Lösungsmittelzuführ-Port der zweiten Schaltventileinheit und den Trenneinrichtungsübergabe-Port der zweiten Schaltventileinheit dem Eingangsport der zweiten Trenneinrichtung zugeführt wird (Patentanspruch 11).

Nach einer weiteren Ausführungsform der Erfindung kann der zweiten Trenneinrichtung eine Probenkonzentrationseinheit vorgeschaltet sein. Hierdurch ist es möglich, gering konzentrierte Proben mit relativ großem Volumen zu hoch konzentrierten Proben mit mit kleinem Volumen aufzukonzentrieren und anschließend weiter zu trennen und zu analysieren.

Die Probenkonzentrationseinheit kann eine Rückhalteeinheit und eine dritte Schaltventileinheit umfassen, wobei die Rückhalteeinheit und die dritte Schaltventileinheit so verschaltet sind, dass in einer zweiten Schaltstellung der dritten Schaltventileinheit das in Richtung auf die zweite Trenneinrichtung geführte, die Probe enthaltende Medium durch die Rückhalteeinheit geleitet wird, wobei die Rückhalteeinheit im Wesentlichen nur das Lösungsmittel passieren lässt und die Bestandteile der Probe blockiert, und dass in einer ersten Schaltstellung ein der Probenkonzentrationseinheit zugeführtes zweites Lösungsmittel die Rückhalteeinheit in umgekehrter Richtung durchfließt, die an der Rückhalteeinheit konzentrierten Probenbestandteile ausspült und zur zweiten Trenneinrichtung transportiert (Patentanspruch 13).

Die dritte Schaltventileinheit weist dabei vorzugsweise einen ansteuerbaren Antrieb auf und wird von der Steuereinheit so angesteuert, dass während der Proben-Injektionsphase die dritte Schaltventileinheit in die zweite Schaltstellung und die zweite Schaltventileinheit in die zweite Schaltstellung gesteuert werden und dass in der sich an die Proben-Injektionsphase anschließenden zweiten Trennphase die dritte Schaltventileinheit in die erste Schaltstellung gesteuert wird (Patentanspruch 14).

Nach einer weiteren Ausführungsform der Erfindung kann an Stelle der dritten eine vierte Schaltventileinheit vorgesehen sein, welche in einer ersten Schaltstellung den Ausgangsport der ersten Trenneinrichtung und in einer zweiten Schaltstellung den Ausgangsport der zweiten Trenneinrichtung mit dem Trenneinrichtungsübernahme-Port der ersten Schaltventileinheit verbindet. Hierdurch ist die Fraktionierung nach beiden Dimensionen (Trennphasen) möglich (Patentanspruch 15).

Die vierte Schaltventileinheit weist einen ansteuerbaren Antrieb auf und die Steuereinheit steuert die vierte Schaltventileinheit so an, dass diese während der ersten Trennphase in die erste Schaltstellung und während der zweiten Trennphase in die zweite Schaltstellung gesteuert wird (Patentanspruch 16).

Die Steuereinrichtung steuert während der zweiten Trennphase die Entnahme- und Abgabeeinrichtung und/oder die Fraktionsaufnahmegefässe zeitlich aufeinanderfolgend in mehrere Fraktionsabgabepositionen, wobei in jeder Fraktionsabgabeposition aus der Entnahme- und Abgabeeinrichtung austretendes Medium dem betreffenden Fraktionsaufnahmegefäss als Fraktion zugeführt wird (Patentanspruch 17).

In den obengenannten weiteren Ausführungsformen der Erfindung steuert die Steuereinrichtung die entsprechenden Schaltventileinheiten und die Entnahme- und Abgabeeinrichtung so an, dass zunächst für jede Probe eine erste Trennphase durchgeführt wird und anschliessend für jede Fraktion der ersten Probe eine zweite Trennphase (Patentanspruch 18).

Weitere Ausführungsformen ergeben sich aus den übrigen Unteransprüchen.

Die Erfindung wird nachfolgend anhand in der Zeichnung dargestellter Figuren näher erläutert. In der Zeichnung zeigen:
- Fig. 1: eine schematische Darstellung des Grundprinzip eines automatischen bekannten Probengebers;
- Fig. 2: eine schematische Darstellung eines für die Fraktionierung von Proben erweiterten, bekannten Probengebers;
- Fig. 3: eine schematische Darstellung einer ersten Ausführungsform einer Vorrichtung nach der Erfindung;
- Fig. 4: eine schematische Darstellung zweier Varianten für das Abtropfen einer Fraktion von der Probennadel;
- Fig. 5: eine schematische Darstellung zur Erläuterung des Einsatzes eines 10-Port-Ventils als Ersatz für ein 8-Port-Ventil;
- Fig. 6: eine schematische Darstellung einer weiteren Ausführungsform einer Vorrichtung nach der Erfindung zur 2D-Trennung mit Fraktionierung nach der ersten Dimension;
- Fig. 7: eine schematische Darstellung einer weiteren Ausführungsform einer Vorrichtung nach der Erfindung zur 2D-Trennung mit Trapsäule; und
- Fig. 8: eine schematische Darstellung einer weiteren Ausführungsform einer Vorrichtung nach der Erfindung zur 2D-Trennung mit Fraktionierung nach beiden Dimensionen.

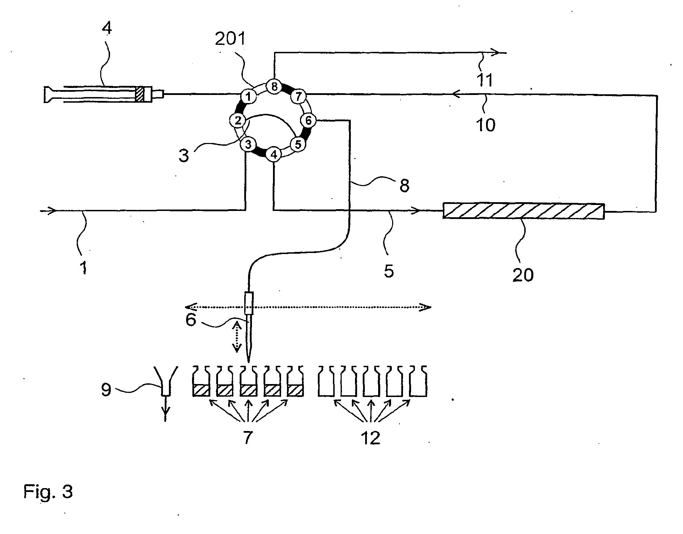

Figur 3 zeigt eine schematische Darstellung einer ersten Ausführungsform einer erfindungsgemäße Anordnung eines kombinierten Probengebers/Fraktionssammlers, in der nur die zur Erläuterung der Grundfunktionalität erforderlichen Komponenten dargestellt sind.

Das 6-Port-Schaltventil 2 des Probengebers nach Figur 2 ist durch ein 8-Port-Schaltventil 201 ersetzt. Das bei der Vorrichtung in Figur 2 zusätzlich erforderliche Schaltventil 13 entfällt.

Analog zur Beschreibung des 6-Port-Ventils in Figur 2 werden im Folgenden die beiden Schaltstellungen des 8-Port-Ventils mit den Bezugzeichen 1-2 und 8-1 bezeichnet.

Die Beschaltung der Ports 1 bis 6 des 8-Port-Ventils in Figur 3 entspricht genau der Beschaltung bei der in Figur 2 dargestellten Vorrichtung. Die Rückführungskapillare 10 ist an Port 7 angeschlossen und in Position 1-2 des Schaltventils 201 mit der Wastekapillare 11 verbunden.

Die Funktion der Ports 1 bis 6 des 8-Port-Schaltventils 201 ist identisch zu den entsprechenden Ports des 6-Port-Schaltventils 2 nach dem Stand der Technik gemäß Figur 2. Insoweit ist auch die Arbeitsweise analog zum Stand der Technik:

In der gezeichneten Position 1-2 des Schaltventils 201 sind folgende Komponenten in Reihe geschaltet: die Dosierspritze 4, die Probenschleife 3, die Verbindungskapillare 8 sowie die Probennadel 6. Während die Probennadel 6 in einen Probenbehälter 7 eintaucht, kann somit durch Ansaugen mit der Dosierspritze 4 Probenmaterial aus dem Probenbehälter 7 entnommen und insbesondere in die Probenschleife 3 gesaugt werden.

Über die gegenüber dem Stand der Technik neu hinzugekommenen Ports 7 und 8 ist die Rückführungskapillare 10 mit der Wastekapillare 11 verbunden. Somit wird der aus der Säule 20 zurückkommende Flüssigkeitsstrom, der zu diesem Zeitpunkt noch keine einzusammelnden Fraktionen enthält, dem Abfall zugeführt.

Vor der Injektion kann die Probennadel 6 zum Wasteport 9 gefahren werden, um zu verhindern, dass während der Injektion der aus der Probennadel 6 austretende Flüssigkeitsstrom in den Probenbehälter 7 gelangt.

Für die Injektion wird anschließend das Schaltventil 201 in Position 8-1 geschaltet, so dass die Probenschleife 3 zwischen die Eingangskapillare 1 und die Ausgangskapillare 5 geschaltet ist und das Probenmaterial der Säule 20 zugeführt wird. Dort erfolgt der erste Trennschritt.

Weiterhin ist in Position 8-1 des Schaltventils 201 die Dosierspritze 4 unmittelbar mit der Wastekapillare 11 verbunden, so dass die Spritze in dieser Position entleert werden kann.

Nach der Injektion kann das Schaltventil 201 wahlweise in Position 1-2 zurückgeschaltet werden oder in Position 8-1 verbleiben. In beiden Fällen gelangt der Flüssigkeitsstrom aus der Eingangskapillare 1 in die Ausgangskapillare 5, entweder direkt oder auf dem Umweg über die Probenschleife 3. Der über die Rückführungskapillare 10 eintreffende Flüssigkeitsstrom wird entweder über die Wastekapillare 11 oder den Wasteport 9 dem Abfall zugeführt.

Das beim Stand der Technik beschriebene Verfahren zur Verarbeitung geringer Probenmengen (Mikroliter-Pickup) kann in Zusammenhang mit der Erfindung ebenfalls genutzt werden. Dazu muss lediglich das Ansaugen der Probe in der dort beschriebene Art und Weise vorgenommen werden.

Nach der Injektion passiert das injizierte Probenmaterial die Kapillare 5 und erreicht die Säule 20. Die Durchlaufzeit durch die Säule ist je nach Stoffeigenschaften unterschiedlich, so dass die einzelnen Bestandteile zeitlich getrennt am Ausgang der Säule erscheinen. Das Passieren der Kapillaren und die Trennung selber nehmen eine gewisse Zeitdauer in Anspruch, so dass die getrennten Fraktionen mit deutlicher Verzögerung (gegenüber der Injektion) über die Rückführungskapillare 10 den Probengeber erreichen.

Bevor die zu sammelnden Fraktionen eintreffen, müssen die Reste der aufgenommenen Probe aus der Probennadel 6 und der Verbindungskapillare 8 entfernt werden. Hierzu kann die Probennadel auf den Wasteport 9 positioniert und das Schaltventil 201 in Position 8-1 gebracht werden. Der über die Rückführungskapillare 10 eintreffende Flüssigkeitsstrom befördert nun die unerwünschten Reste der Probe in den Wasteport 9.

Sobald die in der Säule 20 getrennten Fraktionen über die Rückführungskapillare 10 eintreffen, wird die Probennadel 6 auf den gewünschten Fraktionssammelbehälter 12 positioniert und das Schaltventil 201 in Position 8-1 geschaltet, so dass die Rückführungskapillare 10 über die Verbindungskapillare 8 mit der Probennadel 6 verbunden ist.

Am Ende der Probennadel 6 bildet sich dadurch ein Flüssigkeitstropfen, der die gewünschte Fraktion enthält und im entsprechenden Fraktionssammelbehälter 12 abgelegt werden soll, sobald er das gewünschte, vorgebbare Flüssigkeitsvolumen enthält. Wie dies erreicht werden kann, wird weiter unten beschrieben.

Für die nächste Fraktion wird die Probennadel 6 auf den nächsten Fraktionssammelbehälter 12 positioniert.

Während des Positioniervorgangs bildet sich am Ende der Probennadel 6 der nächste Flüssigkeitstropfen, der bereits die im nächsten Fraktionssammelbehälter 12 abzulegende Fraktion enthält. Die über die Eingangskapillare 1 gelieferte Flussrate muss so niedrig gewählt sein, dass der Flüssigkeitstropfen nicht bereits während des Positioniervorgangs abtropfen kann.

Die Anzahl der zweckmäßigerweise zu sammelnden Fraktionen hängt von der Dauer des Trennvorgangs ab. Bei einer zu geringen Anzahl geht der Vorteil der Fraktionierung weitgehend verloren, bei einer zu hohen Anzahl ist die pro Fraktion eingesammelte Probenmenge zu gering für einen zweiten Trennschritt.

Zweckmäßige Werte für die Praxis wären die Sammlung von beispielsweise 20 Proben über einen Zeitraum von beispielsweise 20 Minuten.

An dieser Stelle sei darauf hingewiesen, dass die Steuerung der sämtlicher Schaltventile sowie die Steuerung der Probennadel 6 relativ zu den Probenbehältern 7 bzw. den Fraktionsgefäßen 12 vorzugsweise teilweise oder vollständig automatisiert erfolgen kann. Hierzu sind die Schaltventile (Schaltventileinheiten) und die Probennadel 6 (Entnahme- und Abgabeeinrichtung) mit einem geeigneten ansteuerbaren Antrieb zu versehen. Die Ansteuerung kann mittels einer Steuereinheit (nicht dargestellt) erfolgen, welche in üblicher Weise als Mikroprozessor-Schaltung ausgebildet sein kann, die über geeignete Steuerausgänge und erforderlichenfalls über geeignete Signaleingänge verfügt. Die Steuerung kann über eine geeignete Software (Firmware) erfolgen. Da auch bekannte Probengeber über eine solche Steuereinheit verfügen, muss zum Nachrüsten eines vorhandenen Probengebers zu einem erfindungsgemäßen kombinierten Probengeber/Fraktionssammler im einfachsten Fall lediglich ein Schaltventil ausgetauscht und eine neue Software (Firmware) eingespielt werden. Da eine derartige Steuereinheit an sich bekannt ist und sich die Steuereinheit zur Realisierung der Erfindung nur hinsichtlich der Funktionalität unterscheidet, kann auf die Darstellung der Steuereinheit in der Zeichnung verzichtet werden. Die sich gegenüber bekannten Steuereinheiten unterscheidenden Merkmale und Eigenschaften der Steuereinheit nach der Erfindung lassen sich durch funktionelle Merkmale definieren.

Wie oben beschrieben, sollen die gesammelten Fraktionen jeweils ein definiertes, vorgebbares Volumen beinhalten.

Ohne weitere Maßnahmen würde der Flüssigkeitstropfen jeweils dann von der Probennadel 6 in den Fraktionssammelbehälter 12 gelangen, wenn er eine solche Größe erreicht hat, dass er aufgrund der Schwerkraft abtropft. Die hierfür kritische Tropfengröße hängt von vielen Einflussfaktoren wie Oberflächenspannung und spezifische Masse der Flüssigkeit sowie Bewegungen der Probennadel ab, daher würde das tatsächlich in den Fraktionssammelbehältern 12 abgelegte Flüssigkeitsvolumen stark schwanken.

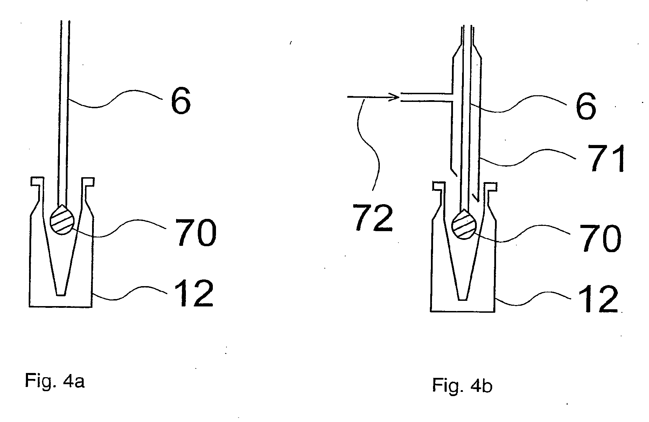

Das Abtropfen kann erfindungsgemäß durch unterschiedliche Methoden zum gewünschten Zeitpunkt ausgelöst werden. Nachfolgend werden einige dieser Methoden anhand Figur 4 näher erläutert. Figur 4 zeigt folgende Teile: Eine Probennadel 6, einen der Fraktionssammelbehälter 12, einen Flüssigkeitstropfen 70 am Ende der Probennadel 6, einen Vorstecher 71 und einen Luftstrom 72.

Die einfachste Möglichkeit, das Abtropfen des Flüssigkeitstropfens auszulösen, besteht darin, dass man die Probennadel 6 so bewegt, dass der Flüssigkeitstropfen 70 eine der Wände des Fraktionssammelbehälters 12 berührt. Dabei ist es besonders zweckmäßig, Probensammelbehälter 12 mit einem sich nach unten verjüngenden Innendurchmesser zu verwenden, wie in Figur 4a gezeigt. Derartige Behälter werden häufig als Probenbehälter 7 verwendet und sind daher gut erhältlich. In diesem Fall genügt es, die Probennadel 6 so weit abzusenken, dass der Flüssigkeitstropfen 70 die Wände des Probenbehälters 12 berührt. Da die Wände eine wesentlich größere Oberfläche aufweisen als die Probennadel 6, bleibt danach praktisch der gesamte Flüssigkeitstropfen 70 im Fraktionssammelbehälter 12 haften, auch wenn die Probennadel 6 wieder aus dem Behälter herausgefahren wird.

Ein anderes Verfahren ist in Figur 4b dargestellt. Dieses Verfahren lässt sich bei Probengebern nutzen, die über einen Vorstecher 71 mit Luftspülung verfügen. Der Vorstecher 71 dient normalerweise dazu, eine ggf. bei den Probenbehältern 7 vorhandene Abdeckung zu durchstoßen. Die Luftspülung wird bei derartigen Geräten normalerweise verwendet, um den Raum zwischen der Probennadel 6 und dem Vorstecher 71 von unerwünschten Flüssigkeitsrückständen, z.B. Probenmaterial, zu reinigen. Dazu wird ein Luftstrom 72 in den Vorstecher 71 eingeleitet, der unten zwischen Probennadel 6 und Vorstecher 71 austritt. Erfindungsgemäß werden die vorhandenen Komponenten jedoch nicht nur zum Reinigen des Raums zwischen der Probennadel 6 und dem Vorstecher 71 verwendet (hierbei handelt es sich um ein einfaches Ausblasen von Verschmutzungen). Vielmehr wird mit einem definierten Luftstrom, der als definierter Luftimpuls ausgebildet sein kann, der Flüssigkeitstropfen zu einem definierten Zeitpunkt von der Probennadel gelöst. Der Verlauf des Luftimpulses (zeitlicher Verlauf der Strömungsgeschwindigkeit) kann von einer Steuereinheit (nicht dargestellt) in Verbindung mit einer Einheit zur Erzeugung des Luftimpulses gesteuert werden. Im einfachsten Fall öffnet die Steuereinheit lediglich zur gewünschten Zeit ein steuerbares Ventil einer mit Luftdruck beaufschlagten Leitung, die an den Innenraum des Vorstechers 71 angeschlossen ist:

Dieses Verfahren und diese Vorrichtung für das Abtropfen eines Tropfens eines flüssigen Medium, insbesondere einer Fraktion, kann selbstverständlich bei beliebigen anderen Fraktionssammelvorrichtungen oder kombinierten Probengeber- und Fraktionssammelvorrichtungen verwendet werden.

Eine dritte Möglichkeit zum Auslösen des Abtropfvorgangs ist eine plötzliche Bewegung der Probennadel 6, so dass der Flüssigkeitstropfen 70 aufgrund seiner Massenträgheit nicht folgen kann und somit in den Fraktionssammelbehälter 12 abtropft.

Welche der genannten Methoden am besten geeignet ist, hängt von den Gegebenheiten des jeweiligen Probengebers und von der Größe der zu fraktionierenden Flüssigkeitstropfen ab.

Wenn das pro Fraktion zu sammelnde Volumen höher ist als das Volumen, das ein einzelner Tropfen annehmen kann, müssen die soeben beschriebenen Verfahren lediglich auf den letzten Tropfen angewandt werden.

Die gesammelten Fraktionen sollen in den meisten Fällen einem zweiten Trennschritt zugeführt werden. Dazu werden an Stelle der ursprünglichen Proben aus den Probenbehältern 12 nun die bereits vorgetrennten Fraktionen aus den Fraktionssammelbehältern 12 injiziert.

Somit ist es möglich, mit dem erfindungsgemäßen Aufbau automatisch zwei hintereinander geschaltete Trennschritte durchzuführen.

Für eine zweidimensionale Trennung mit zwei hintereinandergeschalteten Trennschritten muss der zweite Trennschritt in der Regel mit einem anderen Säulentyp, anderen Lösungsmittelzusammensetzungen und ggf. auch anderen Flussraten durchgeführt werden.

Die nach dem zweiten Trennschritt am Ausgang der Säule zur Verfügung gestellten, nun zweidimensional getrennten, Probenbestandteile können nun erneut fraktioniert oder direkt einer Detektionsvorrichtung, beispielsweise einem UV-Detektor oder einem Massenspektrometer, zugeführt werden.

Für derartige Anwendungen ist beim erfindungsgemäßen Aufbau ebenso wie beim Stand der Technik ein weiteres Schaltventil am Ausgang der Säule 20 erforderlich. Dies ist in Figur 2 und Figur 3 nicht berücksichtigt, da diese Abbildungen nur das Fraktionierungsprinzip verdeutlichen sollen. Erfindungsgemäße Anordnungen, die dies ermöglichen, sind weiter unten beschrieben.

Da 8-Port-Schaltventile, wie sie für die erfindungsgemäße Lösung benötigt werden, nicht besonders marktüblich sind, kann es zweckmäßig sein, an Stelle des 8-Port-Ventils ein 10-Port-Ventil zu verwenden.

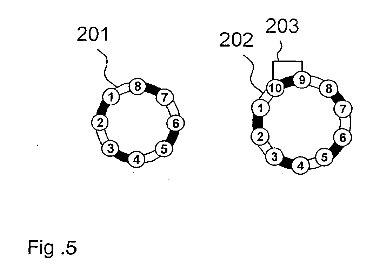

Dies ist problemlos möglich, wie in Figur 5 gezeigt. Beim 10-Port-Ventil 202 werden die nicht benötigten Ports 9 und 10 durch eine so genannte Brücke 203 miteinander verbunden. Die übrigen Ports 1 bis 8 haben nun in beiden Stellungen die gleiche Funktionalität wie beim 8-Port-Ventil. Das zwischen Port 1 und 8 zusätzlich eingefügte Volumen stört bei der erfindungsgemäßen Anwendung nicht, da dieser Pfad ohnehin nur zur Entleerung der Dosierspritze 4 in den Abfall benötigt wird.

Da die Kosten für ein 8-Port- oder 10-Port-Schaltventil nur unwesentlich höher sind als für ein 6-Port-Schaltventil, bedeutet die erfindungsgemäße Lösung eine wesentliche Aufwands- und Kostenersparnis. Es wird weder ein zusätzliches Ventil noch die zugehörige Steuerelektronik benötigt. Zudem ist in vielen Fällen eine nachträgliche Umrüstung möglich, da das Antriebssystem von 6- und 10-Port-Ventilen in der Regel identisch ist.

Bezüglich der Funktionalität bedeutet die Erfindung gegenüber dem Stand der Technik keine Einschränkung, da die Fraktionierung zwangsläufig zu einem deutlich späteren Zeitpunkt als die Injektion stattfinden muss.

Auch die zur Festlegung eines definierten Fraktionsvolumen benötigten Einrichtungen sind in einem normalen Probengeber bereits vorhanden. Aufgrund der Erfindung kann ein vorhandener Probengeber also mit minimalem Umrüstaufwand zu einem kombinierten Probengeber / Fraktionssammler erweitert werden.

Sofern im Aufbau genügend Schaltventile zur Verfügung stehen, kann das eingesparte Schaltventil zur Realisierung aufwändigerer und leistungsfähigerer Anordnungen verwendet werden, wie sie im folgenden beschrieben sind.

Wie bereits erläutert, dient die in Figur 3 gezeigte Ausführungsform (ebenso wie die in Figur 2 dargestellte Anordnung nach dem Stand der Technik) zur Erläuterung des Prinzips der Fraktionierung im eindimensionalen Fall. Für die praktische Realisierung von mindestens zwei hintereinander geschalteten Trennschritten mit 2 Trennphasen (2D-Trennung) werden zusätzliche Komponenten benötigt. Im Folgenden werden Ausführungsformen vorgeschlagen, die auf der erfindungsgemäßen Lösung basieren und es ermöglichen, die einzelnen Trennschritte weitgehend unabhängig voneinander zu optimieren.

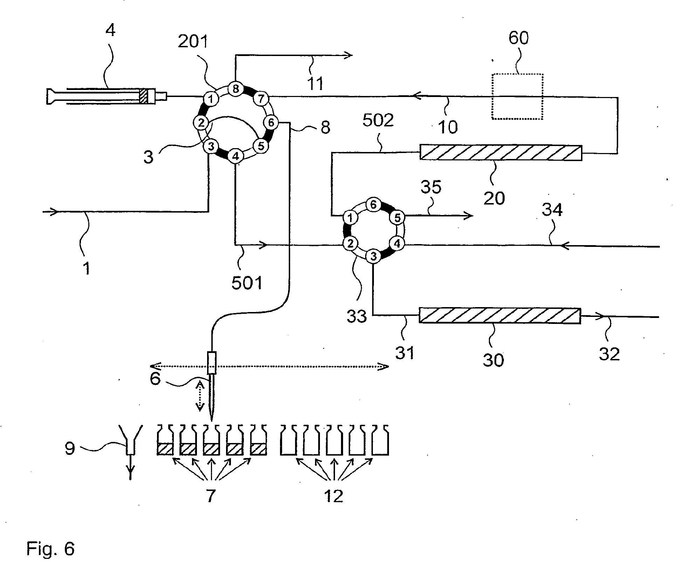

Figur 6 zeigt eine Ausführungsform, die eine zweidimensionale Stofftrennung (2D-Chromatographie) ermöglicht. Gegenüber der Ausführungsform in Figur 3 wurden folgende zusätzlichen Komponenten hinzugefügt: Eine zweite Säule 30, eine Eingangskapilllare 31 für die zweite Säule, eine Ausgangskapillare 32 für zweite Säule, ein Säulenumschaltventil 33, eine zusätzliche Eingangskapillare 34, eine zusätzliche Wastekapillare 35, ein optionaler Detektor 60 und Verbindungskapillaren 501 und 502

Die zweite Säule 30 dient zur Durchführung des zweiten Trennschritts. Das Fließmittel für diese wird über die zusätzliche Eingangskapillare 34 von einer zweiten Pumpe geliefert. Das Säulenumschaltventil 33 kann den von der Kapillare 501 ankommenden Flüssigkeitsstrom entweder über die Säule 20 oder über die Säule 30 leiten.

In der gezeichneten Stellung des Säulenumschaltventils 33 (Schaltstellung 1-2) entspricht die Funktion der Anordnung genau der Anordnung nach Figur 3. Die Probe wird durch die Säule 20 getrennt und die Fraktionen werden in den Fraktionssammelbehältern 12 gesammelt. Mit dem optionalen Detektor 60 kann dieser Vorgang überwacht bzw. gesteuert werden.

Für die Trennung in der zweiten Dimension wird eine zweite Säule 30 verwendet. Der Lösungsmittelfluss für diese zweite Säule wird über die Kapillare 34 geliefert. Die Verwendung einer zweiten Säule und eines zweiten Lösungsmittelflusses hat den Vorteil, dass für den ersten und den zweiten Trennschritt unterschiedliche SäulenPackungsmaterialien, Lösungsmittel und Flussraten verwendet werden können. Dadurch können für den zweiten Trennschritt andere Stoffeigenschaften als für den ersten ausgenutzt werden, was man als 2D-Chromatographie bezeichnet. Hierdurch ist eine besonders effiziente Trennung komplexer Stoffgemische möglich.

Für den zweiten Trennschritt wird jeweils eine der gesammelten Fraktionen aus dem entsprechenden Fraktionssammelbehälter 12 entnommen und in der oben beschriebenen Art und Weise injiziert. Das Säulenumschaltventil 33 wird auf Position 6-1 geschaltet und leitet die Fraktion an die zweite Säule 30 weiter. Bei zweckmäßiger Wahl der Lösungsmittel und des Säulenpackungsmaterials bleibt die Fraktion zunächst am Kopf der zweiten Säule 30 hängen. Für die eigentliche Trennung wird das Säulenumschaltventil wieder in Position 1-2 gebracht. Das über die zusätzliche. Eingangskapillare 34 zugeführte Lösungsmittel bewirkt den Trennvorgang, d.h. die einzelnen Bestandteile der Fraktion passieren die Säule 30 mit unterschiedlicher Geschwindigkeit und stehen an der Ausgangsskapillare 32 in zeitlich getrennter Form zur Verfügung. Dort kann eine Detektionsvorrichtung, beispielsweise ein UV-Detektor und/oder ein Massenspektrometer angeschlossen sein, mit der die Stoffmenge und/oder Stoffzusammensetzung bestimmt werden kann.

Der gesamte zweite Trennvorgang wird der Reihe nach für alle zu untersuchenden Fraktionen, die sich in den Fraktionssammelbehältern befinden, durchgeführt.

Der zeitliche Ablauf der Trennungen der einzelnen Proben kann unterschiedlich gewählt werden.

Eine Möglichkeit ist, zunächst der Reihe nach für alle zu analysierenden Proben 7 den ersten Trennschritt durchzuführen und die anfallenden Fraktionen in einer entsprechend großen Zahl von Fraktionssammelbehältern 12 zwischenzuspeichern. Anschließend wird der zweite Trennschritt für sämtliche gesammelten Fraktionen durchgeführt.

Als zweite Möglichkeit wird jeweils eine Probe 7 zunächst im ersten Trennschnitt in Fraktionen aufgetrennt und anschließend der zweite Trennschritt auf diese Fraktionen angewendet. Erst danach wird die nächste Probe injiziert und entsprechend abgearbeitet.

Die in Figur 6 dargestellte Anordnung erlaubt demnach eine zweidimensionale Trennung eines Stoffgemischs, wobei insgesamt lediglich zwei Schaltventile benötigt werden. Analog zu Figur 5 können für die Schaltventile jeweils auch Ausführungen mit einer höheren Anzahl von Ports verwendet werden.

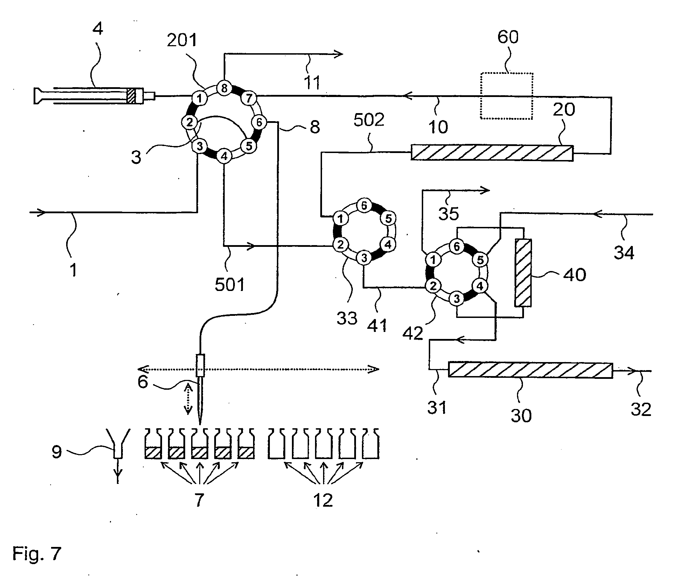

Figur 7 zeigt eine weitere Applikation auf Basis der Erfindung, bei der der zweiten Säule 30 eine Trap-Säule 40 zur Realisierung einer "Reversed Phase"-Trennung vorgeschaltet ist. Gegenüber der Ausführungsform nach Figur 3 wurden folgende zusätzlichen Komponenten hinzugefügt: Eine zweite Säule 30, eine Eingangskapilllare 31 für die zweite Säule, eine Ausgangskapillare 32 für die zweite Säule, ein Säulenumschaltventil 33, eine Verbindungskapillare 41, ein Trapsäulenschaltventil 42, eine zusätzliche Eingangskapillare 34, eine zusätzliche Wastekapillare 35, ein optionaler Detektor 60 und Verbindungskapillaren 501 und 502.

Der Aufbau und die Funktion entsprechen Figur 6, jedoch ist der zweiten Säule 30 nun eine Trapsäule 40 mit Trapsäulenschaltventil 42 vorgeschaltet.

In der gezeichneten Stellung des Säulenumschaltventils 33 (Position 1-2) entspricht die Funktion der Anordnung wiederum genau der Anordnung nach Figur 3. Die Fraktionen werden in den Fraktionssammelbehältern 12 gesammelt. Mit dem optionalen Detektor 60 kann dieser Vorgang überwacht bzw. gesteuert werden.

Für die Trennung in der zweiten Dimension wird auch hier eine zweite Säule 30 verwendet. Der Lösungsmittelfluss für diese zweite Säule wird über die Kapillare 34 geliefert. Dies hat die gleichen Vorteile wie oben beschrieben.

Für den zweiten Trennschritt wird jeweils eine der gesammelten Fraktionen aus dem entsprechenden Fraktionssammelbehälter 12 entnommen und in der oben beschriebenen Art und Weise injiziert. Das Säulenumschaltventil 33 und das Trapsäulenschaltventil 42 werden beide auf Position 6-1 geschaltet. Die Fraktion gelangt somit über die Verbindungskapillare 501, das Säulenumschaltventil 33 und das Trapsäulenschaltventil 42 auf die Trapsäule 40. Bei zweckmäßiger Wahl der Säulenpackungsmaterialien und der Lösungsmittel bleibt dabei die Probe am Eingang der Trapsäule 40 (unterer Anschluss in Figur 7) hängen und wird dort aufkonzentriert. Dann wird das Trapsäulenschaltventil 42 in Schaltstellung 1-2 geschaltet. Dadurch wird der über die zusätzliche Eingangskapillare 34 eingespeiste Lösungsmittelstrom in umgekehrter Richtung durch die Trapsäule sowie über das Trapsäulenschaltventil 42 auf die zweite Säule 30 geleitet. Bei zweckmäßiger Wahl der Lösungsmittel und Säulenpackungsmaterialien wird die aufkonzentrierte Fraktion dadurch zur Säule 30 befördert und dort getrennt, d.h. die einzelnen Bestandteile der Fraktion passieren die Säule 30 mit unterschiedlicher Geschwindigkeit und stehen an der Ausgangsskapillare 32 in zeitlich getrennter Form zur Verfügung. Dort kann eine Detektionsvorrichtung, beispielsweise ein UV-Detektor und/oder ein Massenspektrometer angeschlossen sein, mit der die Stoffmenge und/oder Stoffzusammensetzung bestimmt werden kann.

Der gesamte zweite Trennvorgang wird der Reihe nach für alle zu untersuchenden Fraktionen, die sich in den Fraktionssammelbehältern befinden, durchgeführt.

Der Vorteil der Verwendung einer Trapsäule besteht darin, dass das Probenmaterial die Trapsäule im Unterschied zum Lösungsmittel nicht passiert und somit aufkonzentriert werden kann. Das Probenvolumen reduziert sich dadurch und die Konzentration steigt an. Dies ist bei niedrig konzentrierten Proben die Voraussetzung für eine gute Trennung. Da sich durch die Fraktionierung eine gewisse Verdünnung der Proben nicht vermeiden lässt, ist die Verwendung einer Trapsäule in Verbindung mit der Fraktionierung besonders vorteilhaft.

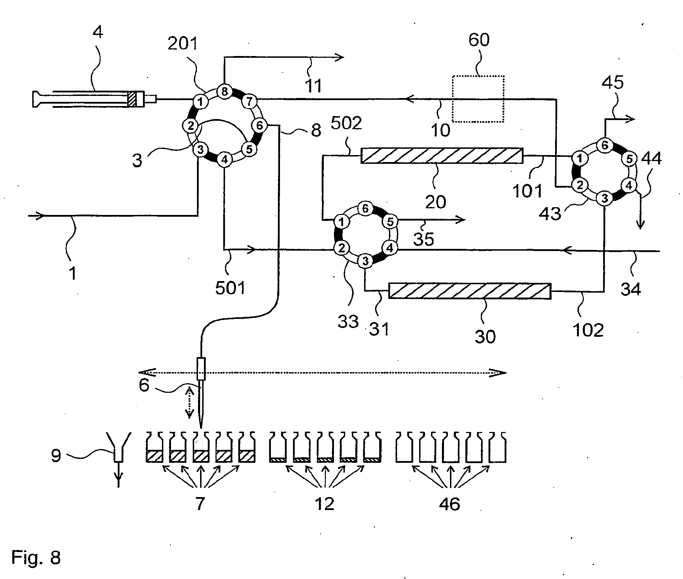

Durch die in Figur 8 dargestellte Erweiterung des Aufbaus aus Figur 6 um ein zweites Säulenumschaltventil können die im zweiten Trennschritt getrennten Probenbestandteile erneut fraktioniert werden. Gegenüber der Ausführungsform nach Figur 6 wurden folgende zusätzlichen Komponenten hinzugefügt: Verbindungskapillare 101 und 102, ein zweites Säulenumschaltventil 43, Wastekapillaren 44 und 45 und zusätzliche Fraktionssammelbehälter 46.

Der Aufbau und die Funktionsweise entsprechen der Ausführungsform nach Figur 6, jedoch sind die Ausgänge der beiden Säulen 10 und 30 an ein zweites Säulenschaltventil 43 angeschlossen. Hiermit können wahlweise die Trennprodukte von Säule 20 oder von Säule 30 auf die Rückführungskapillare geschaltet und somit fraktioniert werden.

In der gezeichneten Stellung des zweiten Säulenumschaltventils 43 (Position 1-2) entspricht die Funktion der Anordnung genau der Anordnung nach Figur 6. Die Fraktionen werden in den Fraktionssammelbehältern 12 gesammelt. Mit dem optionalen Detektor 60 kann dieser Vorgang überwacht bzw. gesteuert werden.

Die Trennung in der zweiten Dimension wird wiederum mit der zweiten Säule 30 und dem Lösungsmittelfluss, der über die Kapillare 34 geliefert wird, durchgeführt. Dabei wird jedoch das zweite Säulenumschaltventil 43 in Position 6-1 umgeschaltet, so dass nun der Ausgang der zweiten Säule 30 über die Verbindungskapillare 102 und das zweite Säulenumschaltventil 43 mit der Rückführungskapillare 10 verbunden ist. Als Probe für diesen zweiten Trennschritt wird jeweils eine der zuvor in den Fraktionssammelbehältern 12 gesammelten Fraktionen aus dem ersten Trennschritt verwendet.

Diese werden im zweiten Trennschritt durch die zweite Säule 30 weiter aufgetrennt und erreichen über die Rückführungskapillare 10, das Schaltventil 202 und die Verbindungskapillare 8 die Probennadel 6. Diese wird zur erneuten Fraktionierung auf die zusätzlichen Fraktionssammelbehälter 46 positioniert, die die zweifach fraktionierten Probenbestandteile aufnehmen.

Die in Figur 8 dargestellte Anordnung erlaubt demnach eine zweidimensionale Trennung eines Stoffgemischs mit Fraktionierung der zweidimensional getrennten Komponenten, wobei insgesamt lediglich drei Schaltventile benötigt werden. Analog zu Figur 5 können für die Schaltventile jeweils auch Ausführungen mit einer höheren Anzahl von Ports verwendet werden.

## Patentansprüche

1. Vorrichtung für das Zuführen von Proben zu einer Trenneinrichtung und für das Sammeln von mittels der Trenneinrichtung erzeugten Probenfraktionen, insbesondere für die Hochleistungs-Flüssigkeitschromatographie,
(a) mit einer ersten Schaltventileinheit (201), welche wenigstens acht Ports (Portnummern 1 bis 8) und zwei Schaltstellungen aufweist,
(i) wobei in einer ersten Schaltstellung (1-2) jeweils genau zwei benachbarte Ports miteinander verbunden sind und
(ii) wobei in einer zweiten Schaltstellung (8-1) jeweils genau diejenigen benachbarten Ports miteinander verbunden sind, die in der ersten Schaltstellung nicht miteinander verbunden sind,
(b) mit einer Dosiereinrichtung (4) für das Zuführen einer Probe zur Schaltventileinheit (201), die mit einem Ansaug-Port (Portnummer 1) der ersten Schaltventileinheit (201) verbunden ist, und
(c) welche mit einer Entnahme- und Abgabeeinrichtung (6) für das Entnehmen einer Probe aus wenigstens einem Pröbenaufnahmegefäß (7) und das Abgeben jeweils einer Fraktion in eines von mehreren Fraktionsaufnahmegefäßen (12) zusammenwirkt, die mit einem Ansaug- und Abgabe-Port (Portnummer 6) der ersten Schaltventileinheit (201) verbunden ist,
(d) wobei ein Lösungsmittelzufiihr-Port (Portnummer 3) der ersten Schaltventileinheit (201) mit einer Zuführleitung (1) für ein erstes Lösungsmittel verbunden ist,
(e) wobei ein Trenneinrichtungsübergabeport (Portnummer 4) der ersten Schaltventileinheit (201) mit dem Eingangsport einer ersten Trenneinrichtung (20) und ein Trenneinrichtungsübernahme-Port (Portnummer 7) der ersten Schaltventileinheit (201) mit dem Ausgangsport der ersten Trenneinrichtung (20) verbunden sind,
(f) wobei ein erster Port eines Probenreservoirs (3) mit einem ersten Probenreservoir-Port (Portnummer 2) der ersten Schaltventileinheit (201) und ein zweiter Port des Probenreservoirs (3) mit einem zweiten Probenreservoir-Port (5) der ersten Schaltventileinheit (201) verbunden sind,
(g) wobei ein Waste-Port (Portnummer 8) der Schaltventileinheit (201) mit einem Waste-Reservoir (11) der ersten Schaltventileinheit (201) verbunden ist und
(h) wobei die Ports der ersten Schaltventileinheit (201) so belegt sind,
(i) dass in der ersten Schaltstellung (1-2) der Ansaug-Port (Portnummer 1) und der erste Probenreservoir-Port (Portnummer 2), der Lösungsmittelzuführ-Port (Portnummer 3) und der Trenneinrichtungsübergabe-Port (Portnummer 4), der zweite Probenreservoir-Port (Portnummer 5) und der Ansaug- und Abgabe-Port (Portnummer 6) sowie der Trenneinrichtungsübernahme-Port (Portnummer 7) und der Waste-Port (Portnummer 8) miteinander verbunden sind und
(ii) dass in der zweiten Schaltstellung (8-1) der erste Probenreservoir-Port (Portnummer 2) und der Lösungsmittelzufiihr-Port (Portnummer 3), der Trenneinrichtungsübergabe-Port (Portnummer 4) und der zweite Probenreservoir-Port (Portnummer 5), der Ansaug- und Abgabe-Port (Portnummer 6) und der Trenneinrichtungsübemahme-Port (Portnummer 7) sowie der Waste-Port (Portnummer 8) und der Ansaug-Port (Portnummer 1) miteinander verbunden sind.

2. Vorrichtung nach Anspruch 1, **dadurch gekennzeichnet, dass** die erste Schaltventileinheit (201) einen steuerbaren Antrieb aufweist und dass eine Steuereinheit vorhanden ist, welche den Antrieb so ansteuert,
(a) dass sich die erste Schaltventileinheit (201) während einer Probenansaugphase in der ersten Schaltstellung (1-2) befindet, wobei während der Probenansaugphase mittels der Entnahme- und Abgabeeinrichtung (6) eine Probe aus einem Probenaufnahmegefäß (7) in das Probenreservoir (3) gefördert wird,
(b) dass die erste Schaltventileinheit (201) nach der Probenansaugphase in die zweite Schaltstellung (8-1) gesteuert wird, wobei in einer sich an die Probenansaugphase anschließenden Proben-Injektionsphase die Probe mittels des über den Lösungsmittelzuführ-Port (Portnummer 3) zugeführten Lösungsmittels aus dem Probenreservoir (3) über den Trenneinrichtungsübergabe-Port (Portnummer 4) der ersten Trenneinrichtung (20) zugeführt wird und das von der ersten Trenneinrichtung (20) über den Trenneinrichtungsübernahme-Port (Portnummer 7) der Entnahme- und Abgabeeinrichtung (6) zugeführte oder in dieser enthaltene Medium einem zusätzlichen Wasteport (9) zugeführt wird, und
(c) dass nach der Proben-Injektionsphase die erste Schaltventileinheit (201) entweder in die erste Schaltstellung (1-2) gesteuert wird oder in der zweiten Schaltstellung (8-1) verbleibt, wobei in der ersten Schaltstellung (1-2) Lösungsmittel direkt der ersten Trenneinrichtung (20) zugeführt wird und dem Trenneinrichtungsübernahme-Port (Portnummer 7) zugeführtes Medium über den Waste-Port (Portnummer 8) der Schaltventileinheit (201) dem Waste-Reservoir (11) zugeführt wird,
in der zweiten Schaltstellung (8-1) Lösungsmittel unter Zwischenschaltung des Probenreservoirs (3) der ersten Trenneinrichtung (20) zugeführt wird und dem Trenneinrichtungsübernahme-Port (Portnummer 7) zugeführtes Medium über den Ansaug- und Abgabe-Port (Portnummer 6) der ersten Schaltventileinheit (201) der Entnahme- und Abgabeeinrichtung (6) und von dieser dem zusätzlichen Waste-Port (9) zugeführt wird, und
(d) dass die erste Schaltventileinheit (201) bevor die getrennten Fraktionen am Trenneinrichtungsübernahme-Port (Portnummer 7) eintreffen in die zweite Schaltstellung (8-1) gesteuert wird, wobei in dieser sich an die Proben-Injektionsphase anschliessenden ersten Trennphase der ersten Trenneinrichtung (20) weiterhin Lösungsmittel zugeführt wird und das vom Ausgangsport der ersten Trenneinrichtung (20) dem Trenneinrichtungsübernahme-Port (Portnummer 7) der ersten Schaltventileinheit (201) zugeführte Medium über den Ansaug- und Abgabeport (Portnummer 6) der ersten Schaltventileinheit (201) der Entnahme- und Abgabeeinrichtung (6) zugeführt und von dieser in Form mehrerer Fraktionen in jeweils ein Fraktionsaufnahmegefäß (12) abgegeben wird.

3. Vorrichtung nach Anspruch 2, **dadurch gekennzeichnet, dass** die Steuereinheit vor der Probenansaugphase die Entnahme- und Abgabeeinrichtung (6) und/oder das Probenaufnahmegefäß (7), aus dem eine Probe entnommen werden soll, in eine Position steuert, in der eine Probe aus dem gewünschten Probenaufnahmegefäß (7) entnommen werden kann.

4. Vorrichtung nach Anspruch 2 oder 3, **dadurch gekennzeichnet, dass** die Steuereinheit während der Proben-Injektionsphase die Entnahme- und Abgabeeinrichtung (6) und/oder den zusätzlichen Waste-Port (9) in eine Position bewegt, in der das aus der Entnahme- und Abgabeeinrichtung (6) austretende Medium dem zusätzlichen Waste-Port (9) zugeführt wird.

5. Vorrichtung nach einem der Ansprüche 2 bis 4, **dadurch gekennzeichnet, dass** die Steuereinheit während der Trennphase die Entnahme- und Abgabeeinrichtung (6) und/oder die Fraktionsaufnahmegefäße (12) zeitlich aufeinanderfolgend in mehrere Fraktionsabgabepositionen steuert, wobei in jeder Fraktionsabgabeposition aus der Entnahme- und Abgabeeinrichtung (6) austretendes Medium dem betreffenden Fraktionsaufnahmegefäß als Fraktion zugeführt wird.

6. Vorrichtung nach einem der vorhergehenden Ansprüche, **dadurch gekennzeichnet, dass** die erste Schaltventileinheit (201) als 10-Port-Schaltventileinheit (202) ausgebildet ist und dass die beiden zusätzlichen Ports mittels einer Brückenleitung (203) kurzgeschlossen sind.

7. Vorrichtung nach einem der vorhergehenden Ansprüche, **dadurch gekennzeichnet, dass** zwischen dem Trenneinrichtungsübergabe-Port (Portnummer 4) der Schaltventileinheit (201) und dem Eingangsport der ersten Trenneinrichtung (20) eine zweite Schaltventileinheit (33) vorhanden ist, welche den Trenneinrichtungsübergabe-Port (Portnummer 4) der ersten Schaltventileinheit (201) in einer ersten Schaltstellung (1-2) mit dem Eingangsport der ersten Trenneinrichtung (20) verbindet und in einer zweiten Schaltstellung (6-1) mit einem Eingangsport einer zweiten Trenneinrichtung (30) für eine zweite Trennphase.

8. Vorrichtung nach Anspruch 7, **dadurch gekennzeichnet, dass** die zweite Schaltventileinheit (33) einen ansteuerbaren Antrieb aufweist und dass die Steuereinheit die zweite Schaltventileinheit (33) zur Durchführung der zweiten Trennphase in die zweite Schaltstellung steuert.

9. Vorrichtung nach Anspruch 8, **dadurch gekennzeichnet, dass** die Steuereinheit den Antrieb der ersten Schaltventileinheit (201) zur Durchführung der zweiten Trennphase so ansteuert,
(a) dass sich die erste Schaltventileinheit (201) während einer Probenansaugphase für die zweite Trennphase in der ersten Schaltstellung (1-2) befindet, wobei während der Probenansaugphase mittels der Entnahme- und Abgabeeinrichtung (6) eine Probe aus einem Fraktionsaufnahmegefäß (12) in das Probenreservoir (3) gefördert wird, und
(b) dass die erste Schaltventileinheit (201) nach der Probenansaugphase in die zweite Schaltstellung (8-1) gesteuert wird, wobei in einer sich an die Probenansaugphase anschließenden Proben-Injektionsphase für die zweite Trennphase die Probe mittels des über den Lösungsmittelzufuhr-Port (Portnummer 3) zugeführten Lösungsmittels aus dem Probenreservoir (3) über den Trenneinrichtungsübergabe-Port (Portnummer 4) und die zweite Schaltventileinheit (33) der zweiten Trenneinrichtung (30) zugeführt wird.

10. Vorrichtung nach einem der Ansprüche 7 bis 9, **dadurch gekennzeichnet, dass** die zweite Schaltventileinheit (33) wenigstens sechs Ports (Portnummern 1 bis 6) und zwei Schaltstellungen aufweist,
(a) wobei in einer ersten Schaltstellung (1-2) jeweils genau zwei benachbarte Ports miteinander verbunden sind,
(b) wobei in einer zweiten Schaltstellung (6-1) jeweils genau diejenigen benachbarten Ports miteinander verbunden sind, die in der ersten Schaltstellung nicht miteinander verbunden sind, und
(c) wobei der Trenneinrichtungsübergabe-Port (Portnummer 4) der ersten Schaltventileinheit (201) mit einem Probeninjektionsport (Portnummer 2) der zweiten Schaltventileinheit (33) verbunden ist und ein Trenneinrichtungsübergabe-Port (Portnummer 3) der zweiten Schaltventileinheit (33) mit einer zweiten Trenneinrichtung (30) verbunden ist,
(d) wobei ein Durchgangsport (Portnummer 1) der zweiten Schaltventileinheit (33) mit dem Eingangsport der ersten Trenneinrichtung (20) verbunden ist,
(e) wobei ein Lösungsmittelzuführ-Port (Portnummer 4) der zweiten Schaltventileinheit (33) mit einer Zuführleitung (34) für ein zweites Lösungsmittel verbunden ist,
(f) wobei die Ports der zweiten Schaltventileinheit (33) so belegt sind,
(i) dass in der ersten Schaltstellung (1-2) der Durchgangsport (Portnummer 1) mit dem Probeninjektionsport (Portnummer 2) und der Trenneinrichtungsübergabe-Port (Portnummer 3) mit dem Lösungsmittelzuführ-Port (Portnummer 4) verbunden sind und
(ii) dass in der zweiten Schaltstellung (6-1) der Probeninjektionsport (Portnummer 2) mit dem Trenneinrichtungsübergabe-Port (Portnummer 3) und der Lösungsmittelzuführ-Port (Portnummer 4) mit einem Waste-Port (Portnummer 5) der zweiten Schaltventileinheit verbunden sind.

11. Vorrichtung nach Anspruch 10, soweit dieser auch auf Anspruch 8 rückbezogen ist, **dadurch gekennzeichnet, dass** die Steuereinheit zur Durchführung einer zweiten Trennphase die Antriebe der ersten (201) und zweiten (33) Schaltventileinheit so ansteuert,
(a) dass sich die erste Schaltventileinheit (201) während einer Probenansaugphase in der ersten Schaltstellung (1-2) befindet, wobei während der Probenansaugphase mittels der Entnahme- und Abgabeeinrichtung (6) eine Probe aus einem Fraktionsaufnahmegefäß (12) in das Probenreservoir (3) gefördert wird,
(b) dass nach der Probenansaugphase die erste Schaltventileinheit (201) in die zweite Schaltstellung (8-1) und die zweite Schaltventileinheit (33) in die zweite Schaltstellung (6-1) gesteuert werden, wobei in einer sich an die Probenansaugphase anschließenden Proben-Injektionsphase die Probe mittels des über den Lösungsmittelzuführ-Port (Portnummer 3) der ersten Schaltventileinheit (201) zugeführte Lösungsmittels aus dem Probenreservoir (3) über den Trenneinrichtungsübergabe-Port (Portnummer 4) der ersten Schaltventileinheit (201) dem Probeninjektionsport (Portnummer 2) der zweiten Schaltventileinheit (33) und über den Trenneinrichtungsübergabe-Port (Portnummer 3) der zweiten Schaltventileinheit (33) dem Eingangsport der zweiten Trenneinrichtung (30) zugeführt wird und
(c) dass nach der Proben-Injektionsphase die zweite Schaltventileinheit (33) wieder in die erste Schaltstellung (1-2) gesteuert wird, so dass das zweite Lösungsmittel über den Lösungsmittelzuführ-Port (Portnummer 4) der zweiten Schaltventileinheit (33) und dem Trenneinrichtungsübergabe-Port (Portnummer 3) der zweiten Schaltventileinheit (33) dem Eingangsport der zweiten Trenneinrichtung (30) zugeführt wird.

12. Vorrichtung nach einem der Ansprüche 7 bis 11, **dadurch gekennzeichnet, dass** der zweiten Trenneinrichtung (30) eine Probenkonzentrationseinheit (40, 42) vorgeschaltet ist.

13. Vorrichtung nach Anspruch 12, **dadurch gekennzeichnet, dass** die Probenkonzentrationseinheit (40, 42) eine Rückhalteeinheit (40) und eine dritte Schaltventileinheit (42) umfasst, wobei die Rückhalteeinheit (40) und die dritte Schaltventileinheit (42) so verschaltet sind, dass in einer zweiten Schaltstellung (6-1) der dritten Schaltventileinheit (42) das in Richtung auf die zweite Trenneinrichtung (30) geführte, die Probe enthaltende Medium durch die Rückhalteeinheit (40) geleitet wird, wobei die Rückhalteeinheit (40) im Wesentlichen nur das Lösungsmittel passieren lässt und die Bestandteile der Probe blockiert, und dass in einer ersten Schaltstellung (1-2) ein der Probenkonzentrationseinheit (40, 42) zugeführtes zweites Lösungsmittel die Rückhalteeinheit (40) in umgekehrter Richtung durchfließt, die an der Rückhalteeinheit (40) konzentrierten Probenbestandteile ausspült und zur zweiten Trenneinrichtung (30) transportiert.

14. Vorrichtung nach Anspruch 13, **dadurch gekennzeichnet, dass** die dritte Schaltventileinheit (42) einen ansteuerbaren Antrieb aufweist und dass die Steuereinheit die dritte Schaltventileinheit (42) so ansteuert, dass während der Proben-Injektionsphase die dritte Schaltventileinheit (42) in die zweite Schaltstellung (6-1) und die zweite Schaltventileinheit (33) in die zweite Schaltstellung (6-1) gesteuert werden und dass in der sich an die Proben-Injektionsphase anschließenden zweiten Trennphase die dritte Schaltventileinheit (42) in die erste Schaltstellung (1-2) gesteuert wird.

15. Vorrichtung nach einem der Ansprüche 7 bis 11, **dadurch gekennzeichnet, dass** eine vierte Schaltventileinheit (43) vorhanden ist, welche in einer ersten Schaltstellung (1-2) den Ausgangsport der ersten Trenneinrichtung (20) und in einer zweiten Schaltstellung (6-1) den Ausgangsport der zweiten Trenneinrichtung (30) mit dem Trenneinrichtungsübernahme-Port (Portnummer 7) der ersten Schaltventileinheit (201) verbindet.

16. Vorrichtung nach Anspruch 15, **dadurch gekennzeichnet, dass** die vierte Schaltventileinheit (43) einen ansteuerbaren Antrieb aufweist und dass die Steuereinheit die vierte Schaltventileinheit (43) so ansteuert, dass diese während der ersten Trennphase in die erste Schaltstellung (1-2) und während der zweiten Trennphase in die zweite Schaltstellung (6-1) gesteuert wird.

17. Vorrichtung nach Anspruch 16, **dadurch gekennzeichnet, dass** die Steuereinrichtung während der zweiten Trennphase die Entnahme- und Abgabe-einrichtung (6) und/oder die Fraktionsaufnahmegefäße (46) zeitlich aufeinanderfolgend in mehrere Fraktionsabgabepositionen steuert, wobei in jeder Fraktionsabgabeposition aus der Entnahme- und Abgabeeinrichtung (6) austretendes Medium dem betreffenden Fraktionsaufnahmegefäß (46) als Fraktion zugeführt wird.

18. Vorrichtung nach einem der Ansprüche 7-11, 13-14 oder 15-17, **dadurch gekennzeichnet, dass** die Steuereinrichtung die Schaltventileinheiten (201, 33, 42, 43) und die Entnahme- und Abgabeeinrichtung (6) so ansteuert, dass für jede Probe zunächst eine erste Trennphase durchgeführt wird und anschließend für jede Fraktion der ersten Probe eine zweite Trennphase.

## Claims

1. Apparatus for feeding samples to a separating device and for collecting sample fractions generated by means of the separating device, in particular for high-performance liquid chromatography,
(a) having a first switch valve unit (201) which has at least eight ports (port numbers 1 to 8) and two switch positions,
(i) wherein in a first switch position (1, 2) in each case precisely two adjacent ports are interconnected, and
(ii) wherein in a second switch position (8-1) in each case precisely those adjacent ports that are not interconnected in the first switch position are interconnected,
(b) having, for feeding a sample to the switch valve unit (201), a dosing device (4) that is connected to a suction intake port (port number 1) of the first switch valve unit (201), and
(c) which interacts with a removal and discharge device (6), for the removal of a sample from at least one sample-holding container (7) and the discharge of a respective fraction into one of a plurality of fraction-holding containers (12), that is connected to a suction intake and discharge port (port number 6) of the first switch valve unit (201),
(d) wherein a solvent feed port (port number 3) of the first switch valve unit (201) is connected to a feed line (1) for a first solvent,
(e) wherein a separating device transfer port (port number 4) of the first switch valve unit (201) is connected to the input port of a first separating device (20), and a separating device take-over port (port number 7) of the first switch valve unit (201) is connected to the output port of the first separating device (20),
(f) wherein a first port of a sample reservoir (3) is connected to a first sample reservoir port (port number 2) of the first switch valve unit (201), and a second port of the sample reservoir (3) is connected to a second sample reservoir port (5) of the first switch valve unit (201),
(g) wherein a waste port (port number 8) of the switch valve unit (201) is connected to a waste reservoir (11) of the first switch valve unit (201), and
(h) wherein the ports of the first switch valve unit (201) are assigned in such a way that
(i) in the first switch position (1-2) the intake port (port number 1) and the first sample reservoir port (port number 2), the solvent feed port (port number 3) and the separating device transfer port (port number 4), the second sample reservoir port (port number 5) and the intake and discharge port (port number 6), as well as the separating device take-over port (port number 7) and the waste port (port number 8) are interconnected, and
(ii) in the second switch position (8-1) the first sample reservoir port (port number 2) and the solvent feed port (port number 3), the separating device transfer port (port number 4) and the second sample reservoir port (port number 5), the intake and discharge port (port number 6) and the separating device take-over port (port number 7), as well as the waste port (port number 8) and the intake port (port number 1) are interconnected.

2. Apparatus according to claim 1, **characterised in that** the first switch valve unit (201) has a controllable drive and **in that** there is a control unit that controls the drive in such a way that
(a) the first switch valve unit (201) is in the first switch position (1-2) during a sample intake phase, wherein during the sample intake phase by means of the removal and discharge device (6) a sample is conveyed from a sample-holding container (7) into the sample reservoir (3),
(b) the first switch valve unit (201) is set to the second switch position (8-1) after the sample intake phase, wherein in a sample injection phase following the sample intake phase the sample is fed by means of the solvent, fed by way of the solvent feed port (port number 3), from the sample reservoir (3) by way of the separating device transfer port (port number 4) to the first separating device (20) and the medium that is fed from the first separating device (20) by way of the separating device take-over port (port number 7) to the removal and discharge device (6) or is contained in the latter is fed to an additional waste port (9), and
(c) after the sample injection phase the first switch valve unit (201) is either set to the first switch position (1-2) or remains in the second switch position (8-1), wherein
in the first switch position (1-2) solvent is fed directly to the first separating device (20) and medium that is fed to the separating device take-over port (port number 7) is fed by way of the waste port (port number 8) of the switch valve unit (201) to the waste reservoir (11),
in the second switch position (8-1) solvent is fed through the intermediary of the sample reservoir (3) to the first separating device (20) and medium that is fed to the separating device take-over port (port number 7) is fed by way of the intake and discharge port (port number 6) of the first switch valve unit (201) to the removal and discharge device (6) and from the latter to the additional waste port (9), and
(d) the first switch valve unit (201) is set to the second switch position (8-1) before the separated fractions arrive at the separating device take-over port (port number 7), wherein in this first separating phase following the sample injection phase further solvent is fed to the first separating device (20) and the medium that is fed from the output port of the first separating device (20) to the separating device take-over port (port number 7) of the first switch valve unit (201) is fed by way of the intake and discharge port (port number 6) of the first switch valve unit (201) to the removal and discharge device (6) and is discharged from the latter in the form of a plurality of fractions into a respective fraction-holding container (12).

3. Apparatus according to claim 2, **characterised in that** before the sample intake phase the control unit sets the removal and discharge device (6) and/or the sample-holding container (7), from which a sample is to be removed, into a position in which a sample can be removed from the desired sample-holding container (7).

4. Apparatus according to claim 2 or 3, **characterised in that** during the sample injection phase the control unit moves the removal and discharge device (6) and/or the additional waste port (9) into a position in which the medium issuing from the removal and discharge device (6) is fed to the additional waste port (9).

5. Apparatus according to one of claims 2 to 4, **characterised in that** during the separating phase the control unit chronologically sets the removal and discharge device (6) and/or the fraction-holding containers (12) into a plurality of fraction discharge positions, wherein in each fraction discharge position medium issuing from the removal and discharge device (6) is fed as a fraction to the relevant fraction-holding container.

6. Apparatus according to one of the preceding claims, **characterised in that** the first switch valve unit (201) is formed as a 10-port switch valve unit (202), and **in that** the two additional ports are shortcircuited by means of a bridge line (203).

7. Apparatus according to one of the preceding claims, **characterised in that** between the separating device transfer port (port number 4) of the switch valve unit (201) and the input port of the first separating device (20) there is a second switch valve unit (33), which connects the separating device transfer port (port number 4) of the first switch valve unit (201) in a first switch position (1-2) to the input port of the first separating device (20) and in a second switch position (6-1) to an input port of a second separating device (30) for a second separating phase.

8. Apparatus according to claim 7, **characterised in that** the second switch valve unit (33) has a controllable drive, and **in that** the control unit sets the second switch valve unit (33) to the second switch position in order to implement the second separating phase.

9. Apparatus according to claim 8, **characterised in that** the control unit controls the drive of the first switch valve unit (201) in order to implement the second separating phase in such a way that
(a) the first switch valve unit (201) is in the first switch position (1-2) during a sample intake phase for the second separating phase, wherein during the sample intake phase by means of the removal and discharge device (6) a sample is conveyed from a fraction-holding container (12) into the sample reservoir (3), and
(b) the first switch valve unit (201) is set to the second switch position (8-1) after the sample intake phase, wherein in a sample injection phase, following the sample intake phase, for the second separating phase the sample is fed by means of the solvent, fed by way of the solvent feed port (port number 3), from the sample reservoir (3) by way of the separating device transfer port (port number 4) and the second switch valve unit (33) to the second separating device (30).

10. Apparatus according to one of claims 7 to 9, **characterised in that** the second switch valve unit (33) has at least six ports (port numbers 1 to 6) and two switch positions,
(a) wherein in a first switch position (1-2) in each case precisely two adjacent ports are interconnected,
(b) wherein in a second switch position (6-1) in each case precisely those adjacent ports that are not interconnected in the first switch position are interconnected, and
(c) wherein the separating device transfer port (port number 4) of the first switch valve unit (201) is connected to a sample injection port (port number 2) of the second switch valve unit (33), and a separating device transfer port (port number 3) of the second switch valve unit (33) is connected to a second separating device (30),
(d) wherein a passage port (port number 1) of the second switch valve unit (33) is connected to the input port of the first separating device (20),
(e) wherein a solvent feed port (port number 4) of the second switch valve unit (33) is connected to a feed line (34) for a second solvent,
(f) wherein the ports of the second switch valve unit (33) are assigned in such a way that
(i) in the first switch position (1-2) the passage port (port number 1) is connected to the sample injection port (port number 2), and the separating device transfer port (port number 3) is connected to the solvent feed port (port number 4), and
(ii) in the second switch position (6-1) the sample injection port (port number 2) is connected to the separating device transfer port (port number 3), and the solvent feed port (port number 4) is connected to a waste port (port number 5) of the second switch valve unit.

11. Apparatus according to claim 10, in so far as the latter is also related to claim 8, **characterised in that** the control unit controls the drives of the first switch valve unit (201) and the second switch valve unit (33) in order to implement a second separating phase in such a way that
(a) the first switch valve unit (201) is in the first switch position (1-2) during a sample intake phase, wherein during the sample intake phase by means of the removal and discharge device (6) a sample is conveyed from a fraction-holding container (12) into the sample reservoir (3),
(b) after the sample intake phase the first switch valve unit (201) is set to the second switch position (8-1) and the second switch valve unit (33) is set to the second switch position (6-1), wherein in a sample injection phase following the sample intake phase the sample is fed by means of the solvent, fed by way of the solvent feed port (port number 3) of the first switch valve unit (201), from the sample reservoir (3) by way of the separating device transfer port (port number 4) of the first switch valve unit (201) to the sample injection port (port number 2) of the second switch valve unit (33) and by way of the separating device transfer port (port number 3) of the second switch valve unit (33) is fed to the input port of the second separating device (30), and
(c) after the sample injection phase the second switch valve unit (33) is set back to the first switch position (1-2) so that the second solvent is fed by way of the solvent feed port (port number 4) of the second switch valve unit (33) and to the separating device transfer port (port number 3) of the second switch valve unit (33) to the input port of the second separating device (30).

12. Apparatus according to one of claims 7 to 11, **characterised in that** a sample-concentrating unit (40, 42) is connected upstream of the second separating device (30).

13. Apparatus according to claim 12, **characterised in that** the sample-concentrating unit (40, 42) comprises a retaining unit (40) and a third switch valve unit (42), wherein the retaining unit (40) and the third switch valve unit (42) are connected so that in a second switch position (6-1) of the third switch valve unit (42) the medium guided in the direction of the second separating device (30) and containing the sample is directed through the retaining unit (40), with the retaining unit (40) allowing the passage of substantially only the solvent and blocking the constituents of the sample, and so that in a first switch position (1-2) a second solvent fed to the sample-concentrating unit (40, 42) flows through the retaining unit (40) in the reverse direction, flushing out sample constituents concentrated at the retaining unit (40) and transporting them to the second separating device (30).

14. Apparatus according to claim 13, **characterised in that** the third switch valve unit (42) has a controllable drive, and **in that** the control unit controls the third switch valve unit (42) so that during the sample injection phase the third switch valve unit (42) is set to the second switch position (6-1) and the second switch valve unit (33) is set to the second switch position (6-1), and **in that** in the second separating phase following the sample injection phase the third switch valve unit (42) is set to the first switch position (1-2).

15. Apparatus according to one of claims 7 to 11, **characterised in that** there is a fourth switch valve unit (43), which in a first switch position (1-2) connects the output port of the first separating device (20) and in a second switch position (6-1) connects the output port of the second separating device (30) to the separating device take-over port (port number 7) of the first switch valve unit (201).

16. Apparatus according to claim 15, **characterised in that** the fourth switch valve unit (43) has a controllable drive, and **in that** the control unit controls the fourth switch valve unit (43) so that it is set to the first switch position (1-2) during the first separating phase and to the second switch position (6-1) during the second separating phase.

17. Apparatus according to claim 16, **characterised in that** the control device chronologically sets the removal and discharge device (6) and/or the fraction-holding containers (46) to a plurality of fraction discharge positions during the second separating phase, with medium that issues from the removal and discharge device (6) being fed to the relevant fraction-holding container (46) as a fraction in each fraction discharge position.

18. Apparatus according to one of claims 7-11, 13-14, or 15-17, **characterised in that** the control device controls the switch valve units (201, 33, 42, 43) and the removal and discharge device (6) in such a way that in the first instance, for each sample, a first separating phase is implemented and then, for each fraction of the first sample, a second separating phase is implemented.

## Revendications

1. Dispositif pour amener des échantillons à un dispositif de séparation et pour recueillir des fractions d'échantillon produites au moyen du dispositif de séparation, en particulier pour la chromatographie liquide haute performance,
(a) avec une première unité de soupapes de commutation (201) qui comporte au moins huit ports (numéros de port de 1 à 8) et deux positions de commutation,
(i) dans une première position de commutation (1-2) exactement deux ports voisins étant reliés à chaque fois entre eux et
(ii) dans une seconde position de commutation (8-1) exactement les ports voisins, qui dans la première position de commutation ne sont pas reliés entre eux, étant à chaque fois reliés entre eux,
(b) avec un dispositif de dosage (4) pour l'amenée d'un échantillon à l'unité de soupapes de commutation (201) qui est relié à un port d'aspiration (numéro de port 1) de la première unité de soupapes de commutation (201), et
(c) qui coopère avec un dispositif de prélèvement et de distribution (6) pour le prélèvement d'un échantillon d'au moins un récipient de réception d'échantillons (7) et la distribution à chaque fois, d'une fraction dans l'un de plusieurs récipients de réception de fractions (12), qui est relié à un port d'aspiration et de distribution (numéro de port 6) de la première unité de soupapes de commutation (201),
(d) un port d'amenée de solvant (numéro de port 3) de la première unité de soupapes de commutation (201) étant relié à une conduite d'amenée (1) pour un premier solvant,
(e) un port de transfert de dispositif de séparation (numéro de port 4) de la première unité de soupapes de commutation (201) étant relié au port d'entrée d'un premier dispositif de séparation (20), et un port de reprise de dispositif de séparation (numéro de port 7) de la première unité de soupapes de commutation (201) étant relié au port de sortie du premier dispositif de séparation (20),
(f) un premier port d'un réservoir d'échantillons (3) étant relié à un premier port de réservoir d'échantillons (numéro de port 2) de la première unité de soupapes de commutation (201) et un second port du réservoir d'échantillons (3) étant relié à un second port de réservoir d'échantillons (5) de la première unité de soupapes de commutation (201),
(g) un port déchets (numéro de port 8) de l'unité de soupapes de commutation (201) étant relié à un réservoir de déchets (11) de la première unité de soupapes de commutation (201), et
(h) les ports de la première unité de soupapes de commutation (201) étant occupés de manière que
(i) dans la première position de commutation (1, 2) le port d'aspiration (numéro de port 1) et le premier port de réservoir d'échantillons (numéro de port 2), le port d'amenée de solvant (numéro de port 3) et le port de transfert de dispositif de séparation (numéro de port 4), le second port de réservoir d'échantillons (numéro de port 5) et le port d'aspiration et de distribution (numéro de port 6) ainsi que le port de reprise de dispositif de séparation (numéro de port 7) et le port déchets (numéro de port 8) soient reliés entre eux, et
(ii) dans la seconde position de commutation (8-1) le premier port de réservoir d'échantillons (numéro de port 2) et le port d'amenée de solvant (numéro de port 3), le port de transfert du dispositif de séparation (numéro de port 4) et le second port de réservoir d'échantillons (numéro de port 5), le port d'aspiration et de distribution, (numéro de port 6) et le port de reprise de dispositif de séparation (numéro de port 7) ainsi que le port déchets (numéro de port 8) et le port d'aspiration (numéro de port 1) soient reliés entre eux.

2. Dispositif selon la revendication 1, **caractérisé en ce que** la première unité de soupapes de commutation (201) comporte un dispositif d'entraînement commandable et **en ce qu'**il est prévu une unité de commande qui commande le dispositif d'entraînement de manière
(a) que la première unité de soupapes de commutation (201) se trouve dans la première position de commutation (1-2) pendant une phase d'aspiration d'échantillon, pendant la phase d'aspiration d'échantillon, un échantillon étant transporté d'un récipient de réception d'échantillons (7) dans le réservoir d'échantillons (3), au moyen du dispositif de prélèvement et de distribution (6),
(b) que la première unité de soupapes de commutation (201) soit commandée dans la seconde position de commutation (8-1) après la phase d'aspiration d'échantillon, dans une phase d'injection d'échantillon, faisant suite à la phase d'aspiration d'échantillon, l'échantillon étant amené, au moyen du solvant amené à travers le port d'amenée de solvant (numéro de port 3) du réservoir d'échantillons (3), à travers le port de transfert de dispositif de séparation (numéro de port 4), au premier dispositif de séparation (20), et le fluide, amené par le premier dispositif de séparation (20), à travers le port de reprise de dispositif de séparation (numéro de port 7), au dispositif de prélèvement et de distribution (6), ou contenu dans celui-ci, étant amené à un port déchets (9) supplémentaire, et
(c) qu'après la phase d'injection d'échantillon, la première unité de soupapes de commutation (201) soit commandée soit dans la première position de commutation (1-2), soit reste dans la seconde position de commutation (8-1), dans la première position de commutation (1-2) du solvant étant directement amené au premier dispositif de séparation (20) et, le fluide amené au port de reprise de dispositif de séparation (numéro de port 7) étant amené au réservoir déchets (11), à travers le port déchets (numéro de port 8) de l'unité de soupapes de commutation (201), dans la seconde position de commutation (8-1) du solvant étant amené au premier dispositif de séparation (20), par interposition du réservoir d'échantillons (3), et le fluide amené au port de reprise de dispositif de séparation (numéro de port 7) étant amené, à travers le port d'aspiration et de distribution (numéro de port 6) de la première unité de soupapes de commutation (201), au dispositif de prélèvement et de distribution (6) et de celui-ci au port déchets (9) supplémentaire, et
(d) que la première unité de soupapes de commutation (201) soit commandée dans la seconde position de commutation (8-1), avant que les fractions séparées parviennent au port de reprise de dispositif de séparation (numéro de port 7), dans cette première phase de séparation, faisant suite à la phase d'injection d'échantillon, du solvant continuant d'être amené au premier dispositif de séparation (20), et le fluide amené du port de sortie du premier dispositif de séparation (20) au port de reprise de dispositif de séparation (numéro de port 7) de la première unité de soupapes de commutation (201), étant amené au dispositif de prélèvement et de distribution (6) à travers le port d'aspiration et de distribution (numéro de port 6) de la première unité de soupapes de commutation (201), et est délivré depuis celui-ci, sous la forme de plusieurs fractions, dans un récipient de réception de fractions (12) respectif.

3. Dispositif selon la revendication 2, **caractérisé en ce que**, avant la phase d'aspiration d'échantillon, l'unité de commande commande le dispositif de prélèvement et de distribution (6) et/ou le récipient de réception d'échantillons (7), à partir duquel un échantillon doit être prélevé, dans une position dans laquelle un échantillon peut être prélevé du récipient de réception d'échantillons (7) souhaité.

4. Dispositif selon l'une quelconque des revendications 2 ou 3, **caractérisé en ce que**, pendant la phase d'injection d'échantillon, l'unité de commande déplace le dispositif de prélèvement et de distribution (6) et/ou le port déchets (9) supplémentaire, dans une position dans laquelle le fluide sortant du dispositif de prélèvement et de distribution (6), est amené au port déchets (9) supplémentaire.

5. Dispositif selon l'une quelconque des revendications 2 à 4, **caractérisé en ce que** pendant la phase de séparation, l'unité de commande commande le dispositif de prélèvement et de distribution (6) et/ou les récipients de réception de fractions (12), successivement dans le temps, dans plusieurs positions de distribution de fractions, le fluide sortant du dispositif de prélèvement et de distribution (6) dans chaque position de distribution de fractions, étant amené en tant que fraction au récipient de réception de fractions concerné.

6. Dispositif selon l'une quelconque des revendications précédentes, **caractérisé en ce que** la première unité de soupapes de commutation (201) est réalisée sous la forme d'une unité de soupapes de commutation à 10 ports (202) et **en ce que** les deux ports supplémentaires sont court-circuités au moyen d'une ligne pont (203).

7. Dispositif selon l'une quelconque des revendications précédentes, **caractérisé en ce qu'**entre le port de transfert de dispositif de séparation (numéro de port 4) de l'unité de soupapes de commutation (201) et le port d'entrée du premier dispositif de séparation (20), il est prévu une deuxième unité de soupapes de commutation (33) qui relie le port de transfert de dispositif de séparation (numéro de port 4) de la première unité de soupapes de commutation (201) dans une première position de commutation (1-2) au port d'entrée du premier dispositif de séparation (20), et dans une seconde position de commutation (6-1) à un port d'entrée d'un second dispositif de séparation (30) pour une seconde phase de séparation.

8. Dispositif selon la revendication 7, **caractérisé en ce que** la deuxième unité de soupapes de commutation (33) comporte un dispositif d'entraînement commandable et **en ce que** l'unité de commande commande la deuxième unité de soupapes de commutation (33) pour l'exécution de la seconde phase de séparation dans la seconde position de commutation.

9. Dispositif selon la revendication 8, **caractérisé en ce que** l'unité de commande commande le dispositif d'entraînement de la première unité de soupapes de commutation (201) pour l'exécution de la seconde phase de séparation, de manière que
(a) la première unité de soupapes de commutation (201) se trouve, pendant une phase d'aspiration d'échantillon pour la seconde phase de séparation, dans la première position de commutation (1-2), tandis que pendant la phase d'aspiration d'échantillon au moyen du dispositif de prélèvement et de distribution (6), un échantillon est transporté d'un récipient de réception de fractions (12) dans le réservoir d'échantillons (3), et
(b) la première unité de soupapes de commutation (201) soit commandée après la phase d'aspiration d'échantillon dans la seconde position de commutation (8-1), tandis que dans une phase d'injection d'échantillon, faisant suite à la phase d'aspiration d'échantillon, pour la seconde phase de séparation, l'échantillon est amené, au moyen du solvant amené à travers le port d'amenée de solvant (numéro de port 3), depuis le réservoir d'échantillons (3), à travers le port de transfert de dispositif de séparation (numéro de port 4) et la deuxième unité de soupapes de commutation (33), au second dispositif de séparation (30).

10. Dispositif selon l'une quelconque des revendications 7 à 9, **caractérisé en ce que** la deuxième unité de soupapes de commutation (33) comporte au moins six ports (numéro de port 1 à 6) et deux positions de commutation,
(a) dans une première position de commutation (1-2) exactement deux ports voisins étant reliés à chaque fois entre eux,
(b) dans une seconde position de commutation (6-1) étant reliés à chaque fois entre eux exactement les ports voisins qui dans la première position de commutation ne sont pas reliés entre eux, et
(c) le port de transfert de dispositif de séparation (numéro de port 4) de la première unité de soupapes de commutation (201) étant relié à un port d'injection d'échantillon (numéro de port 2) de la deuxième unité de soupapes de commutation (33), et un port de transfert de dispositif de séparation (numéro de port 3) de la deuxième unité de soupapes de commutation (33) étant relié à un second dispositif de séparation (30),
(d) un port de passage (numéro de port 1) de la deuxième unité de soupapes de commutation (33) étant relié au port d'entrée du premier dispositif de séparation (20),
(e) un port d'amenée de solvant (numéro de port 4) de la deuxième unité de soupapes de commutation (33) étant relié à une conduite d'amenée (34) pour un second solvant,
(f) les ports de la deuxième unité de soupapes de commutation (3) étant occupés de manière que
(i) dans la première position de commutation (1-2) le port de passage (numéro de port 1) soit relié au port d'injection d'échantillon (numéro de port 2) et le port de transfert de dispositif de séparation (numéro de port 3) soit relié au port d'amenée de solvant (numéro de port 4), et
(ii) dans la seconde position de commutation (6-1), le port d'injection d'échantillon (numéro de port 2) soit relié au port de transfert de dispositif de séparation (numéro de port 3) et le port d'amenée de solvant (numéro de port 4) soit relié à un port déchets (numéro de port 5) de la deuxième unité de soupapes de commutation.

11. Dispositif selon la revendication 10, dans la mesure où celle-ci est rapportée à la revendication 8, **caractérisé en ce que** l'unité de commande commande, pour l'exécution d'une seconde phase de séparation, les dispositifs d'entraînement de la première (201) et de la deuxième (33) unité de soupapes de commutation de manière que
(a) la première unité de soupapes de commutation (201) se trouve, pendant une phase d'aspiration d'échantillon, dans la première position de commutation (1-2), tandis que pendant la phase d'aspiration d'échantillon, un échantillon est transporté, au moyen du dispositif de prélèvement et de distribution (6), depuis un récipient de réception de fractions (12) dans le réservoir d'échantillons (3),
(b) après la phase d'aspiration d'échantillon, la première unité de soupapes de commutation (201) soit commandée dans la seconde position de commutation (8-1) et la deuxième unité de soupapes de commutation (33) dans la seconde position de commutation (6-1), tandis que dans une phase d'injection d'échantillon, faisant suite à la phase d'aspiration d'échantillon, l'échantillon est amené, au moyen du solvant amené à travers le port d'amenée de solvant (numéro de port 3) de la première unité de soupapes de commutation (201), depuis le réservoir d'échantillons (3), à travers le port de transfert de dispositif de séparation (numéro de port 4) de la première unité de soupapes de commutation (201), au port d'injection d'échantillon (numéro de port 2) de la deuxième unité de soupapes de commutation (33) et, à travers le port de transfert de dispositif de séparation (numéro de port 3) de la deuxième unité de soupapes de commutation (33), au port d'entrée du second dispositif de séparation (30), et
(c) après la phase d'injection d'échantillon, la deuxième unité de soupapes de commutation (33) soit commandée à nouveau dans la première position de commutation (1-2), ce qui fait que le second solvant est amené, à travers le port d'amenée de solvant (numéro de port 4) de la deuxième unité de soupapes de commutation (33) et le port de transfert de dispositif de séparation (numéro de port 3) de la deuxième unité de soupapes de commutation (33), au port d'entrée du second dispositif de séparation (30).

12. Dispositif selon l'une quelconque des revendications 7 à 11, **caractérisé en ce qu'**une unité de concentration d'échantillon (40, 42) est couplée en amont du second dispositif de séparation (30).

13. Dispositif selon la revendication 12, **caractérisé en ce que** l'unité de concentration d'échantillon (40, 42) comprend une unité de retenue (40) et une troisième unité de soupapes de commutation (42), l'unité de retenue (40) et la troisième unité de soupapes de commutation (42) étant couplées de manière que dans une seconde position de commutation (6-1) de la troisième unité de soupapes de commutation (42), le fluide contenant l'échantillon dirigé en direction du second dispositif de séparation (30), soit acheminé à travers l'unité de retenue (40), l'unité de retenue (40) laissant passer sensiblement uniquement le solvant et bloquant les constituants de l'échantillon, et que dans une première position de commutation (1-2) un second solvant, amené à l'unité de concentration d'échantillon (40, 42), s'écoule à travers l'unité de retenue (40) en sens inverse, enlève les constituants d'échantillon concentrés sur l'unité de retenue (40), et les transporte vers le second dispositif de séparation (30).

14. Dispositif selon la revendication 13, **caractérisé en ce que** la troisième unité de soupapes de commutation (42) comporte un dispositif d'entraînement commandable, et **en ce que** l'unité de commande commande la troisième unité de soupapes de commutation (42) de manière que pendant la phase d'injection d'échantillon, la troisième unité de soupapes de commutation (42) soit commandée dans la seconde position de commutation (6-1), et la deuxième unité de soupapes de commutation (33) soit commandée dans la seconde position de commutation (6-1), et **en ce que** dans la seconde phase de séparation, faisant suite à la phase d'injection d'échantillon, la troisième unité de soupapes de commutation (42) soit commandée dans la première position de commutation (1-2).

15. Dispositif selon l'une quelconque des revendications 7 à 11, **caractérisé en ce qu'**il existe une quatrième unité de soupapes de commutation (43) qui, dans une première position de commutation (1-2), relie le port de sortie du premier dispositif de séparation (20) et, dans une seconde position de commutation (6-1), relie le port de sortie du second dispositif de séparation (30) au port de reprise de dispositif de séparation (numéro de port 7) de la première unité de soupapes de commutation (201).

16. Dispositif selon la revendication 15, **caractérisé en ce que** la quatrième unité de soupapes de commutation (43) comporte un dispositif d'entraînement commandable et **en ce que** l'unité de commande commande la quatrième unité de soupapes de commutation (43) de manière que, pendant la première phase de séparation, celle-ci soit commandée dans la première position de commutation (1-2) et pendant la seconde phase de séparation, dans la seconde position de commutation (6-1).

17. Dispositif selon la revendication 16, **caractérisé en ce que** pendant la seconde phase de séparation, le dispositif de commande commande le dispositif de prélèvement et de distribution (6) et/ou les récipients de réception de fractions (46) successivement dans le temps, dans plusieurs positions de distribution de fraction, dans chaque position de distribution de fraction, le fluide sortant du dispositif de prélèvement et de distribution (6), étant amené au récipient de réception de fractions (46) concerné, en tant que fraction.

18. Dispositif selon l'une quelconque des revendications 7 à 11, 13 à 14 ou 15 à 17, **caractérisé en ce que** le dispositif de commande commande les unités de soupapes de commutation (201, 33, 42, 43) et le dispositif de prélèvement et de distribution (6), de manière que pour chaque échantillon soit exécutée d'abord une première phase de séparation, puis pour chaque fraction du premier échantillon, une seconde phase de séparation.
